(19) **Europäisches Patentamt / European Patent Office / Office européen des brevets**

(11) **EP 4 682 105 A1**

(12) # EUROPEAN PATENT APPLICATION

(43) Date of publication:
21.01.2026 Bulletin 2026/04

(21) Application number: 24189636.4

(22) Date of filing: 19.07.2024

(51) International Patent Classification (IPC):
*C01C 1/04* (2006.01)  *B01J 8/02* (2006.01)

(52) Cooperative Patent Classification (CPC):
C01C 1/0411; C01C 1/0417; C01C 1/0464

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **ETH Zurich**
**8092 Zurich (CH)**

(72) Inventors:
- **STARK, Wendelin**
  **4900 Langenthal (CH)**
- **FAN, Zhiyuan**
  **8180 Bülach (CH)**

(54) ## SYSTEMS AND REACTORS FOR THE PRODUCTION OF AMMONIA

(57) The present invention relates to systems and reactors for continuous production of ammonia. The systems are particularly suited to produce ammonia in decentralized, rural locations using temporal surplus electricity from renewable sources, thereby allowing the production of fertilizers in the location of need.

Fig. 1A

**Description**

**Background**

Ammonia Synthesis, Haber Bosch Process:

In modern agriculture, the cost of fertilizer is one of the biggest expenses. Ammonia, an important fertilizer itself and precursor to other N-fertilizers, is currently produced from hydrogen and nitrogen via the Haber-Bosch process with an iron-based catalyst. To maximize the output of the process, the Haber-Bosch process operates as a continuous process throughout the year (except necessary downtime caused by maintenance) at 150-250 bar and 350-550 °C. It also requires the use of thoroughly purified nitrogen and hydrogen as the raw material, with the concentration of oxygen-containing species in the low ppm range. Oxygen-containing species, commonly including oxygen, carbon dioxide, carbon monoxide and water, are poisons for the Haber-Bosch catalyst. Currently, this process is only profitable when carried out in large, centralized chemical plants, requiring transportation of both the raw materials and product. Nitrogen can be cheaply obtained from air, but hydrogen is currently obtained from fossil sources, particularly natural gas or coal. Therefore, the price of ammonia heavily depends on geopolitical situations, which further determine the price of natural gas, coal and transportation. The production cost of ammonia in Europe has seen an increase from around 500 USD/t in 2020 to 2500 USD/t in 2022, (Green Chem., 2023, 25, 6603). Further, given the currently used hydrogen source and the transportation costs, ammonia production has a large $CO_2$ footprint.

The kinetics of ammonia synthesis from hydrogen and nitrogen over an iron-based catalyst in a fixed-bed reactor is well-known in the field and described by the Temkin equation (Acta Physicochimica U.R.S.S., 1940, 12, 327). Specifically, this invention relates to ammonia synthesis at close to atmospheric pressure, thus a simplified Temkin equation can be used:

$$k = -\frac{1}{2}\,\gamma^{1.5}\,P^{0.5}\,V\,\ln(1-x^2)$$

where k is the rate constant (unit: $atm^{0.5}\,h^{-1}$); $\gamma$ denotes the gas composition (hydrogen partial pressure divided by three quarters of the total pressure), P denotes the total absolute pressure (unit: atm), V defines the flow rate of the gas stream over the catalyst (also known as the space velocity in the field, defined by the flow rate of gas (reduced to standard temperature and pressure) divided by the inner volume of the reactor, typical unit: $h^{-1}$); and x denotes the ammonia concentration at the reactor outlet (defined by the ammonia concentration divided by the equilibrium ammonia concentration at the applicable temperature, pressure and gas composition, range between 0 and 1). k could be measured at various temperatures, and the activation energy ($E_a$) can be calculated using the known Arrhenius equation. k is not an intrinsic parameter of the catalyst, since it also depends on the packing conditions of the catalyst in the fixed bed. For this reason, the Temkin equation describes the space-time yield of a reactor, making it very useful in practice. A typical value of k for a commercial and non-poisoned iron-based Haber-Bosch catalyst at 400 °C is 1000 $atm^{0.5}\,h^{-1}$. A typical value of $E_a$ is 40 kcal/mol.

The equilibrium ammonia concentrations at different temperatures, pressures and gas compositions are well-known and tabulated. Specifically related to this invention, the equilibrium ammonia concentration at a total pressure of 1 atm, initial gas composition of 75 vol% hydrogen and 25 vol% nitrogen is provided in the table below:

| Temperature (°C) | 350 | 375 | 400 | 425 | 450 | 475 |
|---|---|---|---|---|---|---|
| Equilibrium ammonia concentration (vol %) | 0.864 | 0.592 | 0.415 | 0.298 | 0.218 | 0.163 |

At pressures close to 1 atm, the equilibrium ammonia concentration changes almost linearly with the total pressure. For example, at a total pressure of 5 atm, the equilibrium ammonia concentrations are:

| Temperature (°C) | 350 | 375 | 400 | 425 | 450 | 475 |
|---|---|---|---|---|---|---|
| Equilibrium ammonia concentration (vol %) | 3.904 | 2.740 | 1.946 | 1.414 | 1.041 | 0.783 |

WO2023114890A1 relates to methods for the production of ammonia. The document identifies a need for an economical process for the production of ammonia from nitrogen and hydrogen and identifies the high costs of the hydrogen reactant as a main hinderance. As a consequence, the document proposes a scaled-down Haber-Bosch process operating at 40-80 bar suggesting an axial reactor and using iron oxide as a catalyst for converting $N_2$ + Hz into

ammonia. It is proposed using $H_2$ obtained from electrolysis of water. Although suitable, the system proposed in that document still requires high pressure which poses considerable risks in case of accidents, especially for decentralized applications.

US8597583B2 discloses methods for ammonia production. In this context, the document also identifies a need for an economical process for the production of ammonia from nitrogen and hydrogen and identifies the high costs of the hydrogen reactant as a main hinderance. To address this need, the document proposes hydrogen production by the reaction between steam and a molten metal. The metal needs to be regenerated after it is depleted by reduction with carbon monoxide. The authors believe these process steps result in an economical provision of the starting material hydrogen. Conversion of nitrogen with thus obtained hydrogen to ammonia takes place at 200 bar, 380 - 450°C using an iron catalyst. As discussed above, high reaction pressures and temperatures are considered disadvantageous.

US3305312 discloses the co-production of iron (from iron ore) and ammonia (from naphtha and air), where iron is produced by reduction of iron oxide with partially-oxidized carbonaceous fuel, and the oxidation is performed with air. The off-gas after iron production contains a suitable amount of nitrogen, hydrogen and carbon monoxide, which can be used for ammonia synthesis after being processed. The document states that the combined processes require less fuel than the fuel requirements of the two processes carried out separately. However, ammonia is still synthesized according to the existing Haber-Bosch process, in a separate reactor at pressures of 100 - 1000 bar and temperatures from 400 - 650°C. Although suitable, the system proposed in that document still requires high pressure which poses considerable risks in case of accidents, especially for decentralized applications. Further, the combined process disclosed in that document is detrimental to decentralized production, as iron ore is required as a starting material.

US20040077493A1 discloses novel molecular sieves with catalytic activity. It suggests the production of ammonia from nitrogen in a fluidized bed using a specific mesoporous transition metal oxide molecular sieve as the catalytic active material. Conversion is allegedly achieved at room temperature and ambient pressure. The costs and stability of the catalyst prevent its use at a large scale.

EP3395441A1 describes the production of ammonia from nitrogen in a flow type fixed bed reactor using a specific transition-metal-supported intermetallic compound, an electride, as the catalytic active material; conversion is achieved at 400°C and ambient pressure. Again, the costs and stability of the catalyst prevent its use at a large scale.

US6620398B2 discloses an apparatus and methods for ammonia production from air and water using an iron containing catalyst and reaction pressures of 10-30 MPa, or a ruthenium containing catalysts and reaction pressures of 1-10 MPa. The reactor disclosed is a specific flow tube reactor comprising two reaction steps, first reduction of water to hydrogen followed by reaction of nitrogen with thus produced hydrogen. Accordingly, the overall reaction taking place in the reactor involves hydrogen production by the reaction between steam and a metal. To the disadvantage of the reactor, the metal needs to be regenerated after it is depleted, either by reduction with other chemicals or by intense heat. The metal itself is not a catalyst for ammonia synthesis, and another catalyst is required. Further, the complicated reactor design with three gas channels is also considered impractical for commercial applications.

WO2022084996A1 discloses a batch process for producing ammonia in the liquid phase, where nitrogen, water, carbon dioxide and iron (pure or alloy) are reacted in the liquid phase in a sealed reactor. The document aims to provide a cost-effective process for producing ammonia, particularly not requiring significant investment of external heat. To achieve this, the iron as a reactant is suspended in water and $CO_2$ and $N_2$ are added. During the reaction, iron is converted to iron oxide and iron carbonate, thereby capturing $CO_2$, generating ammonia and avoiding external heat supply. It is apparent that this process requires the presence of iron (+/-0) as an additional starting material for obtaining ammonia, thereby being detrimental to decentralized production. The use of a closed reactor, thereby implementing a batch process, is also disadvantageous when aiming for large scale production.

Energy Production, Energy Storage:

On the other hand, the scale of renewable energy sources is growing exponentially. Due to the fluctuation of the productivity of renewables, the temporal surplus of electricity is also growing. This can be seen already today from short-term negative electricity spot prices. Large-scale renewable power plants are often constructed in remote locations, where farming is the major economic activity. While the energy demand could be met all-year round through energy storage, e.g. as described in EP3699991 B1 and EP3902040B1 , the nitrogen fertilizer demand is still met only by external sources. For almost all crops, the fertilizer is needed only during a certain period of a year (International Fertilizer Corporation, Crop Calendars), normally when the crop is actively growing. In some cases, the time period when fertilizers are applied overlaps with the overproduction from renewables. For example, maize in Ukraine demands fertilizer from April to September, which overlaps with the seasonal peak production of solar energy. Therefore, it may become economically attractive to turn the temporal surplus (thus low- or even negative-cost) renewable electricity into fertilizer, and consume it locally in nearby farms. In this way, ammonia does not need to be shipped over long distances, and the production costs are not affected by geopolitical situations. In such scenario, ammonia production system will only run part-time in any given year, when the electricity price is low.

The temporal surplus of renewable energy could be stored with the hydrogen and energy storage systems using the redox pair $FeO_x/Fe$, which is well-described in EP3699991B1 and EP3902040B1. The method for storing hydrogen comprises the step of reducing $FeO_x$ with a hydrogen-containing gas, thereby obtaining Fe and water. The method for generating hydrogen comprises oxidizing Fe with water, thereby obtaining $FeO_x$ and hydrogen. The process operates with a fixed-bed reactor with a volume of 1-500000 $m^3$, is inherently explosion-proof and suited for domestic or decentralized energy storage. The systems disclosed in those documents operates with a relatively high concentration of oxygen-containing species in the gas phase (e.g. a few volume percent of steam in hydrogen), which is too high for traditional ammonia synthesis.

## Description of the invention

Given the above, there is an unmet need for systems capable to produce ammonia with low investment costs, adapted for rural locations. It would be of additional benefit if such systems are adapted to use temporal surplus electricity from renewable sources. Such systems would allow the production of fertilizers in the location of need. This is achieved by providing,

- in a 1st aspect, ammonia production systems,
- in a 2nd aspect, methods for operating an ammonia production system,
- in a 3rd aspect, reactors and use of reactors for manufacturing ammonia from $N_2$ and $H_2$ in the gas phase, and
- in a 4th aspect, methods for operating such reactors.

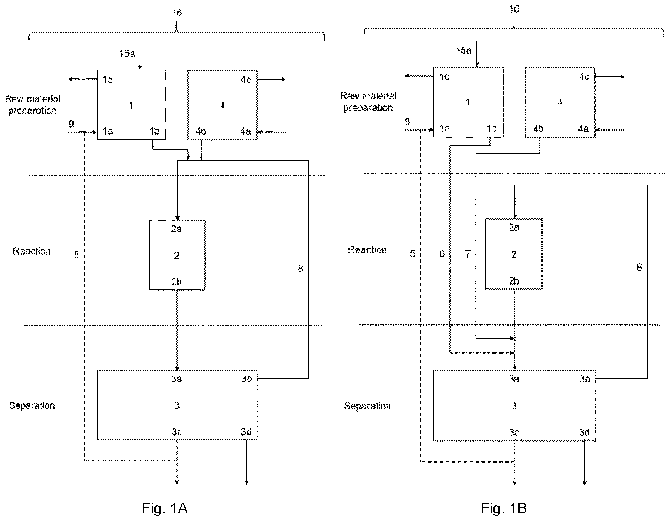

The present invention will be described in more detail below. It is understood that the various embodiments, preferences and ranges as provided / disclosed in this specification may be combined at will. Further, depending of the specific embodiment, selected definitions, embodiments or ranges may not apply. As used herein, the term "a", "an", "the" and similar terms used in the context of the present invention (especially in the context of the claims) are to be construed to cover both the singular and plural unless otherwise indicated herein or clearly contradicted by the context. As used herein, the term "containing" shall include "comprising", "essentially consisting of" and "consisting of". The present invention will be better understood by reference to the **figures** where Figs. 1A, 1B, 2A, 2B, 3A and 3B show the inventive systems, the following **List of references** applies:

| | | | |
|---|---|---|---|
| 1 | Hydrogen supply unit | 12 | Water separating unit |
| | 1a Water inlet | | 12a Separator inlet |
| | 1b Hydrogen outlet | | 12b Hydrogen- and ammonia-rich phase outlet |
| | 1c Water/oxygen outlet | | 12c Water-rich phase outlet |
| 2 | Reactor | 13 | Ammonia separating unit |
| | 2a Reactor inlet | | 13a Separator inlet |
| | 2b Reactor outlet | | 13b Hydrogen-rich phase outlet |
| 3 | Separating unit | | 13c Ammonia-rich phase outlet |
| | 3a Separator inlet | 14 | Second water separating unit |
| | 3b Hydrogen-rich phase outlet | | 14a Separator inlet |
| | 3c Water-rich phase outlet | | 14b Hydrogen-rich phase outlet |
| | 3d Ammonia-rich phase outlet | | 14c Water-rich phase outlet |
| 4 | Nitrogen supply unit | 5 | Water recycle |
| | 4a Air inlet | 6 | Hydrogen purification |
| | 4b Nitrogen-rich phase outlet | 7 | Nitrogen purification |
| | 4c Oxygen-rich phase outlet | 8 | Hydrogen and Nitrogen recycle |
| 11 | Power generating unit | 9 | Water feed |
| | 11a Air/oxygen inlet | 15 | Power Plant |
| | 11b Hydrogen inlet | | 15a Power input |
| | 11c Water-rich phase outlet | | 15b Power output |
| | 11d Hydrogen-rich phase outlet | 16 | ammonia production (and energy storage) system |

**Fig. 1A** shows a first embodiment of the inventive system 16, comprising a hydrogen supply unit 1, a reactor 2, a separator 3 and a nitrogen supply unit 4. In this specific embodiment, the hydrogen supply unit is an electrolyzer, which could produce hydrogen while consuming water 9 and electricity 15a. The hydrogen is combined with the nitrogen from the nitrogen supply unit 4 in reactor 2, producing a gas containing nitrogen, hydrogen, ammonia and potentially water. Water and ammonia are separated in the separator 3, while the rest of the gas is recycled to the reactor. Optionally, the water output from the separator 3 is recycled to the hydrogen supply unit 1 via water recycle (5) to produce hydrogen. Optionally, shown in **Fig. 1B,** the hydrogen output from the hydrogen supply unit 1 and the nitrogen output from the nitrogen supply unit 4 are sent to separator 3 via lines (6) and (7) for purification before being admitted to the reactor 2.

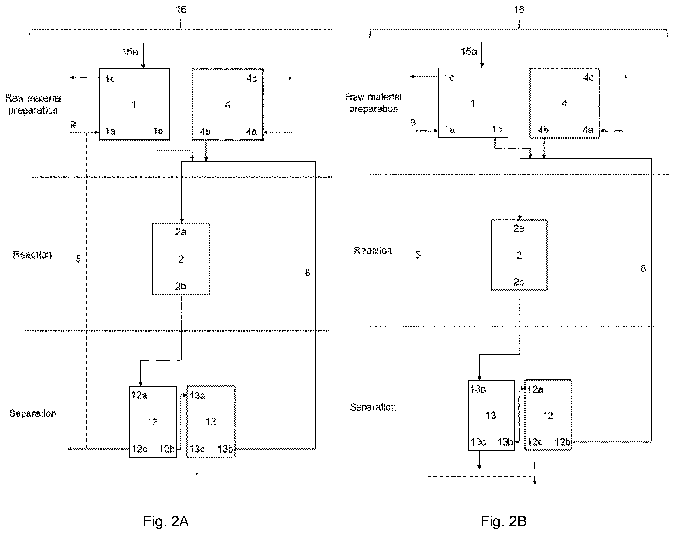

**Fig. 2** shows a second embodiment of the inventive system (16), comprising a hydrogen supply unit 1, a reactor 2, a nitrogen supply unit 4, a water separator (12), and an ammonia separator (13). Compared with the first embodiment, a single separator 3 is replaced by two separators (12, 13). According to **Fig. 2A,** the gas containing nitrogen, hydrogen, ammonia and water leaving the outlet 2b is first passed through a water separator (12) to remove the water at outlet 12c. Then, ammonia is removed in the ammonia separator (13), while the rest of the gas is recycled to the reactor. Optionally, the water output from the water separator (12) is recycled to the hydrogen supply unit 1 via water recycle (5) to produce hydrogen. According to **Fig. 2B,** the sequence of ammonia separation unit (13) and water separation unit (12) is reversed.

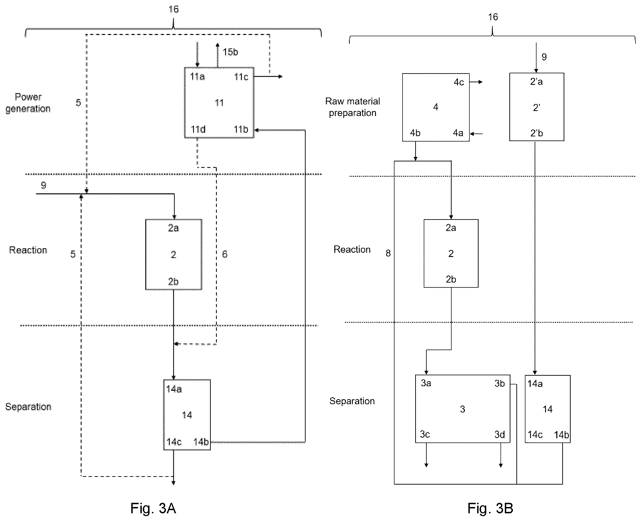

**Fig. 3A** shows a third embodiment of the inventive system (16), comprising a reactor 2, a second water separating unit (14) and a power generating unit (11). In this specific embodiment, water is supplied to a reactor (2') via line (9), producing a gas containing hydrogen and steam. Water and hydrogen are separated in the water separating unit (14), generating a hydrogen-rich phase and a water-rich phase. The hydrogen-rich phase is supplied to the power generating unit (11) for power production (15b). Optionally, the power generating unit (11) only partially consumes the hydrogen, and the unconverted hydrogen is recycled to the water separating unit (14) via line (6) for power generation again. Optionally, the water-rich phase is recycled to the reactor 2 via line (5) for hydrogen production. This fig. does not show the conversion of nitrogen to ammonia. Rather, integration of energy production into the inventive system 16 is shown.

**Fig. 3B** shows a fourth embodiment of the inventive system, comprising a reactor 2 and a reactor 2', where hydrogen is produced in reactor 2' according to the third embodiment, and this hydrogen is used for ammonia production in reactor 2 according to the first embodiment.

In a **first** <u>**aspect,**</u> the invention relates to an ammonia production system 16 adapted to convert nitrogen into ammonia and separating the same from the rest of the process gases. Specifically, the invention provides for an ammonia production system 16 comprising: a reactor 2, said reactor converts nitrogen to ammonia and is in fluid communication with a first unit 1 which continuously supplies hydrogen to a reactor inlet, and a second unit 4 which continuously supplies nitrogen to a reactor inlet, and a third unit 3 which continuously separates ammonia received from a reactor outlet; characterized in that the reactor comprises a reaction vessel 2c, the reaction vessel contains a fixed bed of $FeO_x$ (I), where $0 -- < x -- < 1.5$ and typically has an inner volume inner volume of at least $10\,m^3$, and the reactor and third unit 3 are adapted to reaction pressures of 1 - 10 bar and the reactor 2 is adapted to reaction temperatures of 250 - 500°C, and. Such systems are capable in producing ammonia with low investment costs and low operation costs and are flexible regarding reaction conditions. Thus, they are adapted for rural locations. Further, they are safe in use and flexible in operation.

As it will become apparent from the detailed description below, the inventive system 16 comprises mandatory units, it may be complemented by optional units (and / or elements) and it may be connected to other systems. Mandatory units are reactor 2 (which converts nitrogen + hydrogen to ammonia), first unit 1 (which is also termed hydrogen supply unit), second unit 4 (which is also termed nitrogen supply unit) third unit 3 (which separates as-produced ammonia from non-converted starting materials). A recycle line 8 (which connects outlet of unit 3 with inlet of reactor 2) is an optional - but preferred - element of the inventive system. The inventive system is advantageously connected to a power plant (such as a photovoltaic system or wind energy system) for supplying electricity.

Further, it is understood that each of the units or elements may be present as a single unit / element or may be present as multiple implemented units / elements. For example, two reactors 2a and 2b may be present in the inventive system 16. Accordingly, the inventive system 16 comprises at least one of reactor 2, first unit 1, second unit 4 and third unit 3.

The inventive ammonia production system comprises 3 sections, as indicated in the figures: A section adapted to provide starting materials (comprising units 1 and 4, "hydrogen supply unit" and "nitrogen supply unit") a section adapted to convert the starting materials into ammonia (comprising unit 2, "reactor") and a section adapted to separate obtained ammonia from non-converted starting materials (comprising unit 3, "separator" and optionally recycle line 8).

This aspect and various embodiments of this system shall be explained in further detail below.

## Reactor 2

The reactor 2 comprises a reaction vessel 2c, at least one inlet 2a and at least one outlet 2b, optionally one or more heating elements 2e, optionally an insulation 2f and optionally one or more compensation elements 2d. Suitable reactors are known and described, e.g. EP3699991B1 and EP3902040B1.

**Reaction vessel 2c:** The reaction vessel is filled, preferably in a cavity-free manner, with a fixed bed consisting of **particles of formula (I),** $FeO_x$ (I), with $0 \leq x \leq 1.5$ as defined below.

In embodiments, the term **"cavity-free"** fixed bed relates to a fixed bed which does not contain "large cavities" where large cavities are as defined below. As outlined herein, the reaction vessel is filled with particles of formula (I) in the form of a fixed bed. Accordingly, there is no need to include means for agitation and / or for transportation of particles. This is considered particularly advantageous, as it makes the reactor more robust and particularly useful in large scale applications.

The term **"fixed bed",** also termed "packed bed", is known in the field. It particularly denotes a packing material stationary and immovable located within a reactor vessel. Fixed beds are not agitated by a high mass flow of a fluid or by a stirring device and thus distinguish from a fluidized bed or a moving bed. The packing material of the fixed bed is adapted for allowing one or more fluids passing through the bed thereby allowing a chemical reaction. Suitable packing materials include particles (such as powders, granules and the like) shaped articles (such as Raschig rings) and structured packings.

In one embodiment, the fixed bed consists of particles of formula (I) in the form of a compacted powder, such as pellets. The compacted powder may be shaped in a way to enhance convective transport of mass and /or heat within the fixed bed.

In one embodiment, the fixed bed comprises elements adapted to enhance convective and/or conductive transport of gas and/or heat within the fixed bed (here this is defined as "structured fixed bed"). For example, the fixed bed can contain flow directing elements. Such elements include static mixers and tubes that are generally used to enhance transport of heat and mass.

In one further embodiment, the fixed bed contains materials that enhance conductive transport of heat within the fixed bed such as steel wool with a high stability under process conditions.

The reaction vessel is adapted to **reaction pressure** of 1 - 10 bar, preferably 1.5 - 9 bar, particularly preferably 2.0 - 7.5 bar. Compared to traditional Haber-Bosch Synthesis, this is a very low reaction pressure, and it is counter-intuitive applying such low pressure given the principle of Le Chatelier applies to the overall reaction. However, it allows to use large, thin-walled reactors made with cheap materials with low investment costs. The term "thin-walled" is chosen to define a pressure strength towards the above-defined reaction pressure and temperature. Accordingly, a thin-walled reaction vessel is safe in use of reaction pressures of up to 10 bar (or 9 bar, 7.5 bar respectively), but unsafe and thus not suited, for reaction pressures above 10 bar (or 9 bar, 7.5 bar).

The reaction pressure may vary within a given unit, specifically considering the large size of reactor 2, being filled with a fixed bed of particles. As used herein, the reaction pressure relates to the highest pressure within the reactor 2 and within separating unit 3. It is conventional within the field to implement overpressure valves or other means to ensure maximum pressure is not exceeded. In addition, minimum pressure during operation is adjusted not to drop below ambient pressure. Again, it is conventional within the field to implement measures to avoid pressure drop, e.g. by emergency supply of nitrogen from unit 4.

The **inner volume** of the reaction vessel is typically at least 10 $m^3$, preferably at least 50$m^3$. In some embodiments, discussed below, the inner volume of a reactor may be as small as 1$m^3$. Considering the continuous reaction process, these volumes are large. However, they are considered acceptable, given the low reaction pressure applied to it.

**Heating element(s) 2e:** The reaction vessel is adapted to temperatures of 250 - 500°C. This is achieved by providing at least one heating element 2e (and an insulation 2f discussed below). The at least one heating element may be located

    i. inside the reactor, and/or
    ii. at the reactor wall, and/or
    iii. spatially separated from the reactor vessel.

Depending on the system design, combinations thereof are also envisaged. Such heating elements are known per se.

In embodiment (i), a multitude of heating elements are located within the fixed bed. They directly provide thermal energy to the fixed bed. This embodiment allows homogeneous temperature profile and maintain the reaction temperature.

In embodiment (ii), the reactor comprises a heater configured to provide heat to the reactor wall. This may be implemented in addition to (i) and / or (iii).

In embodiment (iii), external heater is used that heat the fluid prior to entering the reactor. To attain and maintain the specified temperatures during operation, the at least one inlet and the at least one outlet are advantageously configured to receive and transport heated gas, in particular a gas heated up to or above the reaction temperature. This embodiment allows simple construction of the reactor. Specifically, it allows to provide an inventive system where the reaction vessel itself does not comprise a heating element but is adapted to receive the reaction gas heated up to or above the reaction temperature.

**Insulation 2f:** In embodiments, insulation 2f reduces heat dissipation to minimize heat consumption. The reactor 2 comprises a thermal insulation; such insulations are known per se. Thermal insulation of the reactor vessel reduces the amount of heating energy that has to be provided to the reactor. Requirements for insulations are low thermal conductivity and long-term stability at the respective temperatures. Suitable insulations include rock wool and/or vacuum chambers.

**Inlet 2a, outlet 2b:** In- and Outlet are elements, adapted to fill and remove gases from said inner volume. Further, they are adapted to retain particulate material within the reactor vessel. Commercial valves may be used. It is apparent that such in- and outlet are in fluid communication with further units of the system described below (e.g. one inlet in fluid communication with unit 1 and with unit 4 and at least one outlet (2a, 2b) in fluid communication with unit 3). Depending on the operation mode, in- and outlet may exchange its function, i.e. inlet in first operation mode and outlet in second operation mode. Typically, in- and outlet are positioned at opposite sides of the reactor, such as at the top and at the bottom of the reactor 2.

In a further advantageous embodiment, the reactor can comprise multiple inlets and multiple outlets which again might exchange their function depending on the operation mode of the reactor. Further advantageously, the reactor can comprise a number of more than ten inlets and more than ten outlets.

**Compensation element 2d:** One or more compensation elements are included. The term describes an element to compensate a change in volume (compaction/expansion = breathing) of the fixed bed during the process. Accordingly, said compensation element is capable to adjust said inner volume. During the operation of the system described below (2$^{nd}$ aspect), particles of formula (I) are oxidized or reduced. As a consequence thereof particle size changes. To ensure the inner volume is free of cavities, the one or more compensation element is implemented. Accordingly, the one or more compensation element is adapted to compensate volume dilatation / compression during operation of the reactor. Such a compensation element is known per se; it may be configured in the form of a membrane or in the form of a piston or in the form of a sponge or in the form of fibrous material or in the form of a bellow. Suitable fibrous materials are known and include inorganic materials obtained by spinning or drawing molten mineral or rock materials. Examples of such fibrous materials include mineral wool such as commercially available stone wool, slag wool, and glass wool.

Other such suitable materials can be metallic, such as stainless steel with an enhanced corrosion resistance and low potential hydrogen damage.

In particular, if more than one compensation element is implemented in the reactor, the two or more compensation elements can be arranged in series, e.g. a fibrous material such as stone wool can be arranged in series with a bellow to compensate the volume changes during the operation of the reactor.

**Particles of formula (I)**: Formula (I) encompasses iron in oxidation state 0, +2 and +3 and consequently idealized formulae:

$$
\begin{array}{llll}
\text{Fe} & \text{(Ia), } x=0, & \text{Fe}^0 \\
\text{FeO} = \text{FeO}_1 & \text{(Ib), } x=1, & \text{Fe}^{+2} \\
\text{Fe}_3\text{O}_4 = \text{FeO}_{4/3} & \text{(Ic), } x=4/3, & \text{Fe}^{+2} \text{ and Fe}^{+3} \\
\text{Fe}_2\text{O}_3 = \text{FeO}_{3/2} & \text{(Id), } x=3/2, & \text{Fe}^{+3}
\end{array}
$$

Particles of formula (I) are available from many natural and synthetic sources. Such particles are commercial items, and available for example as pigments, iron ores, metallurgical powders, or industrial catalysts from various suppliers. The particles of formula (I) may be a waste from other processes, such as "red mud" from aluminum industry or waste catalysts (eg. from Haber-Bosch process or water-gas shift) which has depleted their catalytic activity. As a consequence, the particles of formula (I) may be "pure", i.e. contain only iron and optionally oxygen, or contain contaminants, such as other metals replacing the iron with up to 30 wt%. Accordingly, formula (I) includes both, pure $FeO_x$, where $0 \leqq x \leqq 1.5$ and doped $FeO_x$ where $0 \leq x \leq 1.5$ and the Fe is replaced in part by other metals with up to 30 wt%.

In the context of this invention a compound of formula (I) is considered "fully reduced" if x=0 and "essentially reduced" if $0<x \leqq 0.1$ and "partly reduced" if $0.1<x \leqq 0.5$.

In embodiments the fixed bed in reactor 2 contains **pure FeO$_x$.** In the context of this invention, pure $FeO_x$ denotes compounds (I) where the amount of metals other than iron is below 1 wt%.

In embodiments, the fixed bed in reactor 2 contains **doped FeO$_x$.** In the context of this invention, doped $FeO_x$ denotes compounds (I) where the amount of metals other than iron is above 1 wt%. Preferably, the dopant is selected from the group consisting of Al (up to 5 wt%, preferably 2-3 wt%, when calculated as $Al_2O_3$), K (up to 2 wt%, preferably 0.5-1 wt%, when calculated as $K_2O$), Ca (up to 3 wt%, preferably 1-2 wt% when calculated as CaO), Co (at least 1 wt%, preferably at least 2 wt%, no more than 5 wt%, when calculated as $Co_3O_4$).

Given the above, the reactor 2 may comprise (i) only particles of formula (I) selected from pure $FeO_x$; or (ii) only particles of formula (I) selected from doped $FeO_x$; or (iii) a combination of particles of formula (I), selected from pure and from doped $FeO_x$. The addition of doped $FeO_x$ may increase ammonia production while it may also increase investment costs.

**Cavity-free filling:** Particles of formula (I) essentially fill the above-described inner volume of reaction vessel 2c. Accordingly, the fixed bed makes up at least 90%, preferably at least 95%, much preferably at least 98% of said inner volume. The remaining volume may be occupied by other elements of the reactor, for example structuring, stabilizing, heating elements, tubes, or in- and outlets.

As discussed above, the fixed bed, comprising or consisting of particles of formula (I), is free of large cavities. The term cavity denotes a space within the reactor volume that does not contain particles of formula (I). Such cavities are defined (i) by a maximum volume and (ii) a maximum length. The volume of a cavity is the volume of the biggest ellipsoid that fits into the cavity. The volume of an ellipsoid is $V_{cavity} = V_{ellipsoid} = 4/3 \cdot \pi \cdot a \cdot b \cdot c$, where a, b, and c are the three principal radii of the ellipsoid.

In one embodiment, no cavities are present (i) where $V_{ellipsoid}$ is larger than $V_{max} = 20000$ mm$^3$, while (ii) all three principal radii describing this volume are at least $c_{min} = 5$ mm. Given the above formula the maximum extension of a cavity is below a = b = 5 mm and $c_{max} = 191$ mm.

In one further embodiment, no cavities are present (i) where $V_{ellipsoid}$ is larger than $V_{max} = 10000$ mm$^3$, while (ii) all three principal radii describing this volume are at least $c_{min} = 3$ mm. Given the above formula the maximum extension of a cavity is below a=b=3 mm and $c_{max} = 265$ mm.

Due to this cavity-free filling of the reactor, accumulation of hydrogen is prevented. The reactor is thereby inherently explosion - proof. In particular, due to the large size of the reactor, the weight of the fixed bed material in particular in the lower region of the reactor is high enough to prevent formation of cavities within the reactor. This is a significant advantage over the prior art, as no specific safety measures have to be taken. The reactor is thereby fit for commercial use on a large scale.

**Further considerations** and embodiments of the reactor 2 are outlined below:

In an embodiment, the reactor is **free of cooling elements.** The ammonia synthesis reaction is exothermal, and the catalyst deactivates when its temperature is too high. Therefore, in a typical Haber-Bosch process, the reactor must be carefully cooled through heat exchangers or complicated gas feeding patterns. In the current invention, this is not necessary since the conversion is low and the temperature rise is limited. Accordingly, in embodiments the cooling of the reactor 2 is achieved only by the heat dissipation of itself. This is advantageous, as it simplifies reactor design and reduces costs and maintenance.

In an embodiment, the reaction vessel is **free of moving elements,** making it simple in construction and maintenance.

It is envisaged that the inventive system 16 may comprise **more than one reactor 2,** i.e. reactor 2 is replaced by reactors 2a, 2b ... 2z.

In embodiments, two or more reactors are present, which are run in parallel. This allows implementing a multitude of smaller reactors, e.g. each 1m$^3$ only. Such embodiment may be advantageous, as pressure drop is minimized and a more flexible operation of the inventive system 16 is enabled.

In embodiments, two or more reactors are present, which are run in sequence. This embodiment allows individual temperature control and / or individually adapting the supply of starting materials for each reactor.

**Hydrogen supply unit 1**

As an integral part of the inventive ammonia production system 16, hydrogen needs to be supplied as a starting material. Unit 1, which is in fluid communication with reactor 2 via inlet 2a, is adapted to supply the hydrogen required for ammonia synthesis to the reactor 2. Unit 1 is adapted to continuously supply the hydrogen at the temperature and pressure required to operate the system. To ensure appropriate temperature and pressure, unit 1 may contain additional elements, such a heater and / or a compressor.

In the context of this invention, different hydrogen sources are envisaged for ammonia production system 16. As the case may be, hydrogen may be manufactured externally and supplied to the location of the system 16, or it may be manufactured on-site, allowing a direct line to reactor 2. Accordingly, the following alternatives for unit 1 are preferred:

i. Pre-manufactured hydrogen;
ii. On-site synthesized hydrogen by conversion of water via electrolysis;

iii. On-site synthesized hydrogen by conversion of a hydrocarbon fuel;
iv. On site synthesized hydrogen by reaction of water with iron.

In embodiment (i), hydrogen supply unit 1 is adapted to supply pre-manufactured hydrogen. Such hydrogen is typically delivered in cylinders, said cylinders are available from various suppliers in different sizes. In this embodiment, unit 1 functions mainly as a storage unit. The advantage of this embodiment is its simple design, as hydrogen manufacturing is outsourced and the hydrogen may have already the purity required for operating the system.

In embodiment (ii), hydrogen supply unit 1 is adapted to manufacture and supply hydrogen by conversion of water via electrolysis. Suitable units are known and include electrolyzers, which consume water and electricity and generate hydrogen. Alternatively, a reversible fuel cell, which is run in electrolyzer mode, may be implemented. In embodiments, the electricity required for operating the electrolyzer or reversible fuel cell is obtained from a renewable source, such as wind or solar energy. In this embodiment, unit 1 functions mainly as a manufacturing unit. The advantage of this system is its high degree of integration, as water as a starting material and energy (particularly when renewable energy is produced on site) are available even in remote locations.

In embodiment (iii), hydrogen supply unit 1 is adapted to manufacture and supply hydrogen by conversion of hydrocarbon fuel. Suitable units are known, e.g. methane after steam reforming and carbon monoxide after water-gas shift.

In embodiment (iv), hydrogen supply unit 1 is adapted to manufacture and supply hydrogen by oxidizing iron to iron oxide. Suitable units are known, and described in EP3699991B1 and EP3902040B1. Referring to fig. 3B, a reactor (2') filled with particles of formula (I) $FeO_x$ (I), where $0 \leqq x \leqq 1$, is provided. That reactor is adapted to convert steam to hydrogen by oxidizing the particle of formula (I). This is a stochiometric reaction. Accordingly, the thus oxidizes iron oxide needs to be replaced once fully oxidized or reduced in a separate cycle. Typically, reactor (2') is present in addition to a unit according to embodiment (i), (ii) or (iii) discussed above.

To operate the system, the hydrogen preferably has a purity of at least 99 vol%, preferably 99.9 vol%, more preferably 99.99 vol%. In embodiments, the hydrogen is thus sufficiently purified in order to remove the poisons for the catalyst before introduced into the reactor. Such purification process can be carried out as a sub-unit of unit 1 and are known per se, e.g. adsorption columns and membrane separators.

In embodiments, hydrogen supply unit 1 comprises an adsorption column and / or a membrane separator arranged prior to the reactor 2.

In embodiments, hydrogen supply unit 1 is in fluid communication with separator 3 via line 6. In this embodiment, separator 3 not only removes as-produced ammonia, but also purifies starting material hydrogen prior to introduction into reactor 2 via line 8.

In embodiments, the inventive system 16 comprises as a hydrogen supply unit

i. an electrolyzer, converting water to hydrogen by electrochemical reaction (i.e. according to embodiment (ii); and optionally
ii. a reactor (2') filled with particles of formula (I) $FeO_x$ (I), where $0 \leqq x \leqq 1$, converting water to hydrogen by oxidizing the particle of formula (I) (i.e. according to embodiment (iv).

**Nitrogen supply unit 4**

As an integral part of the inventive ammonia production system 16, nitrogen needs to be supplied as a starting material. Nitrogen supply unit 4, which is in fluid communication with reactor 2 via inlet 2a, is adapted to supply the nitrogen required for ammonia synthesis to the reactor 2. Unit 4 is adapted to continuously supply the nitrogen at the temperature and pressure required to operate the system. To ensure appropriate temperature and pressure, unit 4 may contain additional elements, such a heater and / or a compressor.

In the context of this invention, different nitrogen sources are envisaged for ammonia production system 16. As the case may be, nitrogen may be manufactured externally and supplied to the location of the system 16, or it may be manufactured on-site, allowing a direct line to reactor 2. Accordingly, the following alternatives for unit 4 are preferred:

i. Pre-manufactured nitrogen;
ii. On-site synthesized Nitrogen, e.g. Air, said nitrogen supply unit can work based on pressure-swing-adsorption;
iii. On-site available nitrogen-containing gas from other processes, such as combustion processes.

In embodiment (i), nitrogen supply unit 4 is adapted to supply pre-manufactured nitrogen. Such nitrogen is typically delivered in cylinders, said cylinders are available from various suppliers in different sizes. In this embodiment, unit 4 functions mainly as a storage unit. The advantage of this embodiment is its simple design, as nitrogen manufacturing is outsourced and the nitrogen may have already the purity required for operating the system.

In embodiment (ii), nitrogen supply unit 4 is adapted to manufacture and supply nitrogen by extraction from air. Suitable units are known and include adsorbers and membrane separation systems. Suitable adsorbers are commercially available and may be based on pressure-swing-adsorption. Suitable membrane systems are also commercially available, e.g. using membranes comprising molecular sieves. The advantage of this system is its high degree of integration, as air as a starting material and energy (particularly when renewable energy is produced on site) are available even in remote locations.

In embodiment (iii), nitrogen supply unit 4 is adapted to use on-site available nitrogen-containing gas streams from other processes, such as combustion. This embodiment is preferred, if such processes are available nearby. In this embodiment, unit 4 functions mainly as a purification unit, to remove the poisons for the catalyst before introduced into the reactor.

To operate the system, the nitrogen preferably has a purity of at least 99 vol%, preferably 99.9 vol%, more preferably 99.99 vol%. In embodiments, the nitrogen is thus sufficiently purified in order to remove the poisons for the catalyst before introduced into the reactor. Such purification process can be carried out in a sub-unit of unit 4 and is known per se, e.g. adsorption columns and membrane separators.

When oxygen is present as an impurity, it can be burnt in the presence of hydrogen into water, and then removed using the water separator (discussed below). Thus, in embodiments, unit 4 comprises a hydrogen-fed burner as a sub-unit and is in fluid communication with separator 3 via line 7. Such purification unit is known per se, and described e.g. in US 2,582,885.

Said nitrogen supply unit 4 may also serve as a source of inert gas, useful to compensate for the pressure decrease in the reactor 2, in case of an emergency, for example the pressure decrease caused by accidental temperature drop. Thus, in embodiments, unit 4 is adapted to provide inertisation of reactor 2 in case of an accident.

**Ammonia separator 3, 13**

As an integral part of the inventive ammonia production system 16, ammonia needs to be separated from the reactors effluent stream. Unit 3, 13 which is in fluid communication with reactor 2 via outlet 2b, is adapted to separate the ammonia from the rest of the process stream, containing nitrogen, hydrogen and possibly water. Unit 3, 13 is adapted to continuously operate and to separate the comparatively low amounts of ammonia present in the process stream obtained via inlet 3a.

In the context of this invention, different ammonia separators are envisaged for ammonia production system 16. Depending on the system 16, the ammonia separator may be a combined unit 3 for separating water (at outlet 3c) and ammonia (at outlet 3d) or specific unit 13 receiving a pre-dried product stream and only separating ammonia (at outlet 13c).

In one embodiment, c.f. Fig. 1A and 1B, the invention provides for an ammonia production system 16 comprising a reactor 2 as described herein, said reactor being in fluid communication with a unit for supplying hydrogen 1, a unit for supplying nitrogen 4 and a unit for separating ammonia and/or water from nitrogen and hydrogen 3. These four units: reactor, hydrogen supply unit, nitrogen supply unit and ammonia separator are considered essential elements of the inventive ammonia production system.

In one further embodiment, c.f. Fig. 2A and 2B, the invention provides for an ammonia production system 16 comprising a reactor 2 as described herein, said reactor being in fluid communication with a unit for supplying hydrogen 1, a unit for supplying nitrogen 4; said reactor being further in fluid communication with a water separating unit 12 and in fluid communication with an ammonia separating unit 13. Thus, a combined unit 3 is replaced by a sequence of (a) water separating unit 12 and ammonia separating unit 13 or ammonia separating unit 13 followed by water separating unit (12).

In both embodiments according to figs. 1 and 2, non-reacted gases nitrogen and hydrogen are recycled via line 8 into the reactor. Units for continuously separating ammonia from a gas stream are known per se and commercially available. Suitable units are known as:

> i. Gas scrubbers, where the produced ammonia is isolated in aqueous media; and
> ii. Adsorption units, where the produced ammonia is isolated as a gas.

> i) Gas scrubber. Such units, also known as gas washer, bring a gas mixture in contact with a liquid, said liquid is able to dissolve or absorb certain components of the gas.

For ammonia scrubbers, water can be used as the liquid due to the high solubility of ammonia in water. The invention thus provides for a system 16 as described herein where the ammonia separator is water-based ammonia scrubber. The thus obtained aqueous ammonia can be further processed or shipped, according to the needs of the manufacturer and the market.

Alternatively, various acids, particularly sulfuric acid and (poly)phosphoric acid, can also be used as the liquid since ammonia is a base. A non-volatile acid is preferred in order not to introduce new impurities into the gas stream.

Therefore, the use of acids such as carbonic acid, hydrochloric acid and nitric acid is not preferred. The invention thus provides for a system 16 as described herein where the ammonia separator is acid-based ammonia scrubber, preferably a sulfuric acid or (poly)phosphoric acid-based ammonia scrubber. Said liquid after ammonia absorption can be used directly or after dilution as a fertilizer.

ii) Adsorption units. It is known that ammonia can be adsorbed by various adsorbents, including silica gel and zeolite. Ammonia can thus be separated by passing the process gas through a fixed bed of adsorbents, where ammonia is adsorbed. Adsorbents operate at two or more temperatures, a lower temperature where ammonia is adsorbed and thus removed from the gas stream, and a higher temperature where ammonia is released, generating an ammonia-containing gas. In addition to the above described temperature-swing-operation, the adsorbent can also operate in pressure-swing or combined temperature-pressure-swing mode. There may be one or more said adsorption columns installed. When there are two or more said adsorption columns installed, one or more could operate in adsorption mode, while the others can operate in desorption mode (regeneration), thereby allowing continuous ammonia production. When the adsorption column operates in temperature-swing or temperature-pressure-swing mode, the heat requirement could be integrated with the heating system of reactor 2. The invention thus provides for a system 16 as described herein where the ammonia separator comprises at least two adsorption columns adapted to absorb ammonia form the reactor effluent stream operating in pressure-swing or temperature-swing, or combined temperature-pressure-swing mode.

Said ammonia-containing gas generated during desorption can be used directly as a fertilizer (direct injection into the soil), or be absorbed with a suitable liquid (water or acid) and then used as a fertilizer. Said ammonia can be stored as a compressed gas, a liquid after liquefaction, or preferably a liquid after being absorbed by a suitable liquid, when the nitrogen fertilizer is not immediately needed.

The ammonia separator can be a stand-alone unit 13 which only removes ammonia, or be a multi-functional unit 3 which can remove both water and ammonia. The combination of water removal and ammonia removal can be done in both a gas scrubber and an adsorption column. Water can be condensed in the gas scrubber when a cold liquid is used (where the scrubber is also a condenser), when a hydroscopic liquid is used (for example concentrated sulfuric acid and concentrated (poly)phosphoric acid); or be adsorbed by the silica gel or zeolite in the adsorption process (where the adsorption column is also a desiccator).

When the ammonia separation and water separation are carried out in different units, the sequence of ammonia separation and water separation is not limited. When water is removed in a desiccator, it is preferred that the ammonia is separated before the water is removed and the rest of the synthesis gas is sent back to the reactor 2, since water vapor is a known poison for ammonia synthesis.

**water separation unit 12**

Water vapor is a known poison for ammonia synthesis. As the reactor 2 contains a fixed bed of $FeO_x$ (with $0 \leq x \leq 1.5$) and hydrogen is present at temperatures ranging from 250 - 500 °C, the formation of water may take place when operating the system 16. When recycling non-reacted starting materials $N_2$ and $H_2$ into the reactor via line 8, it is important to remove water from that stream. This is achieved either by implementing a combined water / ammonia separation unit 3 (discussed above) or by providing an individual water separation unit 12. When present, unit 12 is adapted to continuously operate and to separate the comparatively low amounts of water present in the process stream directly or indirectly obtained via inlet 3a.

In the context of this invention, different water separation units are envisaged for ammonia production system 16. Established methods for the separation of water and hydrogen include condensation of water, adsorption of water in a desiccator, and membrane separation. Depending on the detailed locally available media and characteristics (water, heating sources, size of installed photovoltaics, season, geographic location), different techniques are preferred. Units for continuously separating water from a gas stream are known per se and commercially available. Suitable units are known and include:

    i. Condenser (condensation / freezing of water),
    ii. Desiccator (adsorption of water);
    iii. membrane separator.

Depending on the operation mode of system 16, also more than one unit 12 and combinations thereof are envisaged.

    i) Condensation type separators: In areas with abundant cooling water or in cold climates, condensation type separators for water can be the most cost-effective solution. Condensation type separators also include (a) units where the removed water is in liquid form and (b) "freezers", ie units where the water is frozen. When using freezers, a much drier gas can be obtained.

ii) Desiccator: A desiccator is a vessel filled with a fixed bed, through which the mixture to separate can flow. The fixed bed consists of at least one material of the group of water adsorbing materials. The group of water adsorbing materials includes zeolites (including molecular sieves), silica, calcium oxide, activated alumina and magnesium oxide. Desiccators operate at two temperatures, at least, a first temperature (the lower one) where water is removed and the product stream is dried, and a second temperature (the higher temperature) where water is leaving the desiccator and the desiccator's material is regenerated (dried). In addition to the above described temperature-swing-operation, other desiccators are known that run in pressure-swing- or pressure-temperature-swing-operation. Application of such desiccators is generally feasible, however temperature-swing systems are considered to be simpler and therefore more preferred. In locations where heat is easily available, absorber-based separation of water and hydrogen may be the best option. Such systems can operate over a broad range of temperature, depending on the type of absorber. Silica gels for example are useful at conditions starting at 50 degree Celsius and may be operated up to above 200 degree Celsius. Zeolite and molecular-sieve-based systems typically require higher water desorption temperature. This is advantageous, however, since the water containing product stream leaving the reactor is at elevated temperature, and in an ideal case, the water separation happens at a similar or the same temperature, thus essentially operating isothermal. This is advantageous as essentially no cooling down and re-heating of the hydrogen stream is needed.

**Ammonia production system 16**

The system 16 may be complemented by further units or elements conventional in the field. Further, in view of the discussion above, some combinations of units or specific features were found to be particularly useful. Thus, preferred and alternative embodiments are discussed below.

As discussed in further detail below, $2^{nd}$ aspect of the invention, the inventive system is suitably adapted to **continuous operation,** see first operation mode. Thus, Reactor 2, units 1, 4 and 3 are preferably adapted to continuous operation mode. Thus, reactor 2 continuously converts nitrogen + hydrogen to ammonia, units 1 and 4 continuously supply starting materials and unit 3 continuously separates as-produced ammonia from other gases. Preferably, line 8 continuously recycles non-reacted starting materials into reactor 2.

**Electricity Supply:** The inventive system requires energy for running the various units, specifically in case of an electrolyzer as hydrogen supply unit 1. In one embodiment, the present system 16 is electrically connected to a power plant 15, via power input 15a. The electrical station may be connected to the electrical grid and / or (directly) to other electric power plants (e.g. hydro power plant) and/or local (renewable) electric energy sources (e.g. wind farm, photovoltaic power station). In an advantageous embodiment, the inventive ammonia production system comprises a power plant using local sources for producing electricity, preferably a wind farm or a photovoltaic power station.

**Pumps, compressors:** Further, a pump or a compressor may enable flow of gas for hydrogen/nitrogen recycling. Compressors or pumps are commercially available in the form of membrane pumps, rotary pumps, piston pumps and others. Since only low pressure differences are used in the here described systems, rotary and membrane pumps are suitable. Preferably, the pump is encapsulated with a gas impermeable shell, rendering hydrogen release improbable. The separated water which is produced during recycling can be stored to be used in the second operation mode. Alternatively, the separated water can also be used in the electrolyzer. Further, a pump or a compressor may enable the flow for water feeding and water recycling.

**Measurement/Control System:** The here described system typically requires a control unit, either containing a computer or a microcontroller. In some cases, also a remote-controlled option using a data transmission may be used. Whilst controllers are known to the person skilled in the art, the here described system need at least one pressure controller, at least one temperature measurement. Usually, several temperature measurements and/or several gas sensors (oxygen sensors) will be used to monitor the system.

**Safety:** To improve safety, one or more of the following measures may be implemented.

As a first safety measure, the reactor and associated units / elements, such as water separator or valves and sensors are best arranged in a way to minimize tube length, number of connectors and the area of the outer wall, separating the hydrogen containing parts from the outside (air). While later is common standard in good engineering practice, the inside of the reactor is characterized by the fact that it is essentially full, as described above.

A second safety measure is the comparatively low pressure under which the inventive system operates. The reactor 2 and unit 3 operate at low pressures, thus reducing outflow of hydrogen in case of a leak. This second safety measure is further beneficial to the reactor weight and manufacturing costs, as thinner walls can be used, with lower overall metal requirement.

A third safety measure is absence of moving elements (with the exception of the compensation element 2d and pumps / compressors.

A fourth safety measure would be to install sensors for detecting oxygen. Such monitoring of the oxygen level allows to monitor the method described herein and performing them above the upper explosion limit (UEL) of hydrogen.

In embodiments, the invention provides for an ammonia production system as described herein, where said third unit 3 comprises a fist subunit (12) for separating water, and a second subunit (13) for separating ammonia.

In embodiments, the invention provides for an ammonia production system as described herein, where the system 16 **does not contain a purge,** preferably where the argon impurity in nitrogen is sufficiently low and the hydrogen is obtained from water via electrolysis. In commercial Haber-Bosch process, the synthesis gas obtained by steam-reforming typically contains 0.3 vol% argon and 0.8 vol% methane, which are inert and accumulate in the synthesis loop (line 8). The inert gases are removed usually through a purge, therefore wasting part of the synthesis gas. In the inventive system 16, the hydrogen is preferably obtained from water electrolysis, therefore does not contain methane. The nitrogen is preferably obtained from air, and a purity of 99.999% can be easily achieved with current systems. When the concentration of inert gases is low, a purge is not necessary since the concentration of inert gases will not build up to a level that significantly slows down the ammonia synthesis.

In embodiments, the volumetric ratio between nitrogen and hydrogen in the reactor is between 4:1 and 1:10, which deviates from the stoichiometric ratio 1:3. Due to the constant fluctuation of electricity price, the cost of hydrogen obtained from water electrolysis fluctuates accordingly. By deviating from the stoichiometric ratio, the cost of production can be reduced by producing more hydrogen during times of low electricity price (therefore decreasing the ratio), and producing less hydrogen during times of high electricity price (therefore increasing the ratio).

In embodiments, the invention provides for an ammonia production system as described herein, where the system comprises two or more reactors 2. This embodiment is beneficial, as it allows operating the system 16 in two operation modes in parallel, one reactor converts steam into hydrogen (compound (I) being present in oxidized form and acting as a reactant) while the other converts nitrogen into ammonia (compound (I) being present in reduced form and acting as a catalyst).

In embodiments, the invention provides for an ammonia production system as described herein, where the system contains **a line 8 recycling non-reacted nitrogen and hydrogen** after passing through separator 3 or 12/13 to the reactor inlet.

In embodiments, the invention provides for an ammonia production system as described herein, where the first supply unit supplies **hydrogen obtained from water.**

In embodiments, the invention provides for an ammonia production system as described herein, where the second supply unit supplies **nitrogen obtained from air.**

In embodiments, the ammonia production system 16 as described herein can be combined with additional units as described in EP3699991B1 and EP3902040B1, such as a fuel cell or hydrogen turbine, so that other functions of the system can be achieved, such as seasonal energy storage.

In a **second aspect,** the invention relates to a method for operating an ammonia production system as described herein.

Broadly speaking, the invention provides for the use of reactors and systems as described herein as well as to methods for **producing ammonia,** comprising the steps of feeding a nitrogen- and hydrogen-containing gas to the reactor 2, where the compound of formula (I) in said reactor is already partially or fully reduced, thereby obtaining a gaseous mixture comprising the desired product ammonia, non-reacted nitrogen and hydrogen, and in some cases water as a by-product. The ammonia (and water, if present) is separated from the gas stream, and the remaining gas stream is recycled back to the reactor. Herein below this referred-to as the **first operation mode.**

Further, the system 16 as described herein may be additionally operated in a **second operation mode producing hydrogen.** The thus produced hydrogen may be used either as a starting material for ammonia production (in the first operation mode), and / or be used to produce electricity.

Further, the system 16 as described herein may be additionally operated in a **third operation mode** with in-situ hydrogen production. This operation mode is intended as a temporary operation mode in case the first unit does not, or does not sufficiently, produce hydrogen.

Below, operation modes for the inventive system 16 are described.

**1st operation Mode:**

In an embodiment, the invention provides a method of operating an ammonia production system as described herein in a first operation mode (i), where ammonia is produced for a period $t_1$, the method comprising:

Step (i)(a) supplying the reactor 2 with nitrogen and hydrogen during the specified time period $t_1$, and maintaining a specified temperature which is within the range of 250 - 500°C and maintaining specified pressure which is within the range of 1 - 10 bar; and

Step (i)(b) separating thus obtained ammonia in the third unit and recycling non-converted nitrogen and hydrogen from the third unit into the reactor.

The time frame $t_1$ that said reactor 2 can be used for ammonia production is not particularly limited, as long as there is sufficient amount of iron in the reactor. Given the reactor size and design, $t_1$ typically is more than 1 day. Preferably 20 days --< $t_1$ --< 200 days, particularly preferably 40 days --< $t_1$ --< 120 days.

**In a first embodiment,** a nitrogen- and hydrogen-containing gas is fed to the reactor where particles of formula (I) are predominantly present **in oxidized form, i.e. x>0.5, typically x>1.** In such case, hydrogen is consumed by the reduction of compound with formula (I) and by ammonia synthesis; while nitrogen is only consumed by ammonia synthesis. As more of the fixed bed of compound of formula (I) is reduced by hydrogen, the rate of reduction of compound with formula (I) decreases, while the rate of ammonia synthesis increases. Therefore, the consumption rates of hydrogen and nitrogen change with time. The feed rates of hydrogen and nitrogen to the reactor therefore needs to be adjusted, based on the current concentration of nitrogen and hydrogen in the reactor 2. The gas stream leaving the reactor contains water, ammonia, nitrogen and hydrogen. Both water and ammonia are separated before the rest of the gas is recycled to the reactor 2. The gas recycled to the reactor 2 preferably has a low water concentration, since water is a poison for ammonia synthesis.

Accordingly, the step (i)(a) involves supplying the reactor 2 which is filled with compound of formula (I) in oxidized form, adjustment of feed rates of hydrogen : nitrogen to the reactor, depending on the amount of oxidized form of compound (I) being present. This embodiment will result in initial low production of ammonia during a ramp-phase (when the compound of formula (I) is only partly present in its reduced form), and regular production of ammonia during the steady-state phase (when the compound of formula (I) is fully or essentially fully present in its reduced form).

**In a second embodiment,** a nitrogen- and hydrogen-containing gas is fed to the reactor where particles of formula (I) are predominantly present **in oxidized from, i.e. x>0.5, typically x>1** and an initiating phase $t_{1'}$ takes place. During initiation, hydrogen gas (ie. without nitrogen) is fed to the reactor. The absence of nitrogen maximizes the rate of reduction, since the hydrogen is not diluted. The high rate of reduction in the beginning also results in a high concentration of water, which would otherwise need to be thoroughly removed in order not to poison the catalyst for ammonia synthesis. As the compound of formula (I) is already reduced to a certain extent, the rate of reduction decreases, so does the concentration of water. The initiating phase is then followed by the regular ("steady-state") phase $t_{1''}$ where hydrogen is mixed with nitrogen provided by the nitrogen production unit 4, after which ammonia production proceeds. (while at the same time of reducing remaining oxidized compound of formula (I)).

Accordingly, the step (i)(a) involves supplying the reactor 2 which is filled with compound of formula (I) in oxidized form, with hydrogen during an initiating phase for specified time period $t_{1'}$, and maintaining a specified temperature which is within the range of 250 - 500°C and maintaining specified pressure which is within the range of 1 - 10 bar and supplying the reactor 2 with hydrogen - nitrogen mixture during a steady-state phase for specified time period $t_{1''}$, and maintaining a specified temperature which is within the range of 250 - 500°C and maintaining specified pressure which is within the range of 1 - 10 bar. This embodiment allows adapting temperature and pressure more precisely to the steps of reduction of iron oxide and conversion of nitrogen to ammonia.

**In a third embodiment,** the reactor 2 filled with compound of formula (I) which is predominantly present in **reduced from, i.e. x<0.5, typically x<0.1.** In this embodiment, conversion of nitrogen to ammonia may directly start, due to the presence of catalytically active material. Ammonia synthesis begins by passing a nitrogen- and hydrogen-containing gas through the reactor 2. There is no or less water to be separated in this embodiment.

Accordingly, the step (i) (a) involves supplying the reactor 2 with nitrogen and hydrogen at a fixed ratio during the specified time period $t_1$, and maintaining a specified temperature which is within the range of 250 - 500°C and maintaining specified pressure which is within the range of 1 - 10 bar.


**2nd Operation mode:**

A second operation mode is envisaged in case hydrogen and / or electric energy is required, while ammonia is not. This may be the case during winter period in rural locations, when no fertilizer is needed and/or electricity or hydrogen are in need. It is considered a particular benefit of the inventive system allowing such 2nd operation mode.

In an embodiment, the invention provides a method of operating a production system 16 as described herein in a 2nd operation mode (ii), where hydrogen is produced for a period $t_2$, the method comprising:

step (ii) (a) feeding water to the reactor 2 where compound (I) is present in reduced form, during the specified time period $t_2$, and maintaining a specified temperature which is within the range of 250 - 500°C and maintaining specified pressure which is within the range of 1 - 10 bar; and
step (ii) (b) separating thus obtained hydrogen from non-converted water in the third unit and optionally recycling non-converted water from the third unit into the reactor,

The time frame $t_2$ that said reactor 2 can be used for hydrogen production is not particularly limited, as long as there is sufficient amount of iron in the reactor. Given the reactor size and design, $t_2$ is typically is more than 1 day.

Preferably 40 days $--< t_2 --<$ 200 days, particularly preferably 60 days $--< t_2 --<$ 120 days.

**Combined 1st and 2nd operation Mode:**

In case the system 16 comprises two or more reactors 2 and 2', shown in Fig. 3B, 1st and 2nd operation mode may be performed simultaneously. In this embodiment, one of the reactors is operated in the 2nd mode (i.e. compound (I) is oxidized with steam to obtain hydrogen before the others are oxidized), and the thus produced hydrogen is supplied to the other reactor (where compound (I) is not oxidized) for ammonia production. In this embodiment, reactor 2 preferably contains doped compound of formula (I) and reactor 2' contains pure compound of formula (I).

In this embodiment, reactor 2' is adapted to continuously supply hydrogen for a period $t_3$, in addition to unit 1, for ammonia synthesis. Such reactors 2' are known and described in EP3699991B1 and EP3902040B1. Preferably, the gas phase leaving through 2'b is fed into a water separation unit for removing non-reacted steam. The thus obtained dry hydrogen is fed via line 8 into reactor 2. Even the hydrogen does not fully come from unit 1, the unit 1 is still present (but not shown in fig. 3B. This combined operation mode may be used in case unit 1 does not supply hydrogen in sufficient amounts. The system 16 will operate in this mode for a period $t_3$ and not permanently. Rather, the unit 1 will eventually be capable to deliver hydrogen in sufficient amounts. Accordingly, in this operation mode, the invention provides for the continuous production of ammonia, comprising the step of reacting hydrogen with nitrogen in a reactor containing an iron-containing catalyst, the method comprises:

(a1) continuously supplying gaseous nitrogen to the reactor and
(a2) continuously supplying gaseous hydrogen to the reactor, where the hydrogen is obtained from a unit 1, converting water to hydrogen via electrolysis and from a unit 2' converting water to hydrogen via oxidation of compound (i) being present in reduced form;
(b) continuously reacting a combined gas stream obtained from (a1) and (a2) in the reactor 2, at a specified temperature which is within the range of 250 - 500°C and at specified pressure which is within the range of 1-10 bar and in the presence of the iron-containing catalyst, to thereby converting hydrogen with nitrogen to obtain a product stream containing ammonia,
(c) continuously separating the thus obtained ammonia from non-reacted starting materials (nitrogen hydrogen and optionally water), where nitrogen and hydrogen are recycled to said reactor 2 and water is removed.

In embodiments, the product stream contains 0.1 - 5 vol% ammonia, preferably 0.2 - 2 vol% ammonia.
In embodiments, the feed stream 8 contains less then 1%, preferably less than 0.1% oxygen-containing species.
The time $t_3$ may greatly vary, e.g. between 1 day and 180 days.

**General considerations:**

In one embodiment, the compound of formula (I) in reactor 2 is periodically removed and refilled, for example in an iron plant which only produces iron when there is excess energy available, and needs to store the iron before it is sold. The compound of formula (I) can be reduced in the reactor in-situ, or reduced in another reactor.
The current Haber-Bosch process aims at maximizing the space-time yield of the process in order to be profitable (for example, an ammonia converter with an output of 100 t/d requires only 40-90 $m^3$ of catalyst). This requires a catalyst with high catalytic activity, the use of high pressure, the high purity of the hydrogen- and nitrogen-containing gas, and a high space velocity (at least 1000 $h^{-1}$). However, in the current invention, a reactor 2 with a large volume is necessary anyways (for other purposes, such as seasonal energy storage as described in EP3699991B1 and EP3902040B1). The reactor 2 operates with a low space velocity (typically 5-10 $h^{-1}$), and has a long time available (up to a few months) for the production of ammonia. Therefore, the reduced compound with formula (I) does not necessarily need to have a high catalytic activity towards ammonia comparable to industrial catalysts (a k of 10 $atm^{0.5}h^{-1}$ already gives x = 0.93 at V = 10 $h^{-1}$, P = 1 atm and $\gamma$ = 1), which allows the use of compounds of formula (I) other than industrial catalysts, such as natural iron ores (including pure $FeO_x$ as defined above). A large amount of hydrogen must be passed through the reactor 2 in order to reduce the compound of formula (I), since the conversion of hydrogen to water is thermodynamically limited (no more than 10% conversion at 400 °C). Even with the use of a heat exchanger to heat the gas entering the reactor 2 with the gas exiting the reactor 2, a big heat loss is unavoidable since the efficiency of the heat exchanger cannot reach 100%. Therefore, it is beneficial to achieve two goals, i.e. reduction of compound with formula (I) and ammonia production at the same time, thereby maximizing the use of energy. Another benefit is that the synthesis of ammonia from nitrogen and hydrogen is exothermal (-46 kJ/mol). In commercial Haber-Bosch processes, this reaction heat must be carefully removed in order not to create hot spots in the conventional Haber-Bosch reactor, while in the current invention, the reaction heat reduces the power consumption of the heating element 2e. There is essentially no risk of creating hot spots since the equilibrium conversion of ammonia is low. Another benefit is the low concentration of inert compounds.

In embodiment, the invention provides for the continuous production of ammonia, comprising the step of (a) reacting hydrogen with nitrogen in a reactor 2 as defined herein:

- at a specified temperature which is within the range of 250 - 500°C and at specified pressure which is within the range of 1 - 10 bar, and
- said nitrogen is continuously provided to said reactor 2 as a gas phase,
- said hydrogen is continuously provided to said reactor 2 as a gas phase, and
- the reaction gases, comprising ammonia and non-converted starting materials are continuously removed from said reactor 2 and (b) continuously separating said ammonia from non-reacted starting materials which are recycled to said reactor 2. Given the above reaction conditions, starting materials and reaction products are present as a gas phase, while the reaction $N_2 + 3 H_2 = 2 NH_3$ takes place on the surface of the catalyst, compound of formula (I), not in the gas phase.

In embodiment, the invention provides for the continuous production of ammonia, where the concentration of oxygen-containing species in the gas phase during said reaction is <1 vol%, preferably <0.1 vol%, more preferably <0.01 vol%. In a typical Haber-Bosch process, not more than a few ppm of oxygen-containing species is tolerated, otherwise the catalyst is poisoned. Since a highly active catalyst is not required in this invention, a higher concentration of oxygen-containing impurities could be tolerated, making the purification of starting materials cheaper and less-energy consuming. The term oxygen-containing species is known in the field and includes moieties containing oxygen, such as $O_2$, $H_2O$, CO, $CO_2$.

In embodiment, the invention provides for the continuous production of ammonia, where said hydrogen is continuously produced by electrolysis of water, preferably using renewable energy.

In embodiment, the invention provides for the continuous production of ammonia, where said hydrogen is produced by reacting steam with a compound of formula (I) $FeO_x$ (I), in reduced form, preferably where $0 -< x --< 0.1$.

In embodiment, the invention provides for the continuous production of ammonia, where said nitrogen is continuously produced by extraction from air.

In embodiment, the invention provides for the continuous production of ammonia, comprising the step of reacting hydrogen with nitrogen in a reactor containing an iron-containing catalyst, the method comprises:

(a) continuously supplying starting materials nitrogen and hydrogen to the reactor;
(b) continuously reacting the starting materials in the reactor, at a specified temperature which is within the range of 250 - 500°C and at specified pressure which is within the range of 1 - 10 bar and in the presence of the iron-containing catalyst, to thereby obtain a product stream containing ammonia,
(c) continuously separating the thus obtained ammonia from non-reacted starting materials which are recycled to said reactor,

characterized in that the product stream contains 0.1 - 5 vol% ammonia, preferably 0.2 - 2 vol% ammonia. As discussed herein, operating a system that results in low yields of the desired product is against the intuition. However, considering low investment costs, high flexibility of the process and the ammonia is produced where and when it is needed, the process is highly beneficial.

**Description of the figures:**

The above operation modes and uses are described in further detail by reference to the figures 1 to 3.

In **Fig 1A,** the system 16 is operated in the 1st mode for ammonia production. A hydrogen supply unit 1, in the form of an electrolyzer, connected with power supply 15a is fed with water through line 9 into inlet 1a. The thus produced hydrogen is directly fed to reactor inlet 2a. A nitrogen supply unit 4 is used to produce or provide nitrogen from air. The thus produced nitrogen is directly fed to reactor inlet 2a. Within the reactor, the hydrogen is reacted with nitrogen to produce ammonia, producing a gaseous mixture comprising or essentially consisting of ammonia, nitrogen and hydrogen. The gas mixture can additionally contain water. The mixture leaves reactor 2 through outlet 2b and enters separator 3 through inlet 3a. Ammonia (and water, if present) leaves the separator through outlet 3d. The nitrogen/hydrogen mixture is recycled via line 8. The ammonia production may be carried out simultaneous to the reducing of the compound of formula (I), thereby consuming part of the hydrogen supplied to form water and compound of formula (I) in reduced form. The ammonia production may occur as the only reaction, in case the compound of formula (I) is fully reduced (x=0) or essentially reduced (0<x<0.1). Typically, during the first operation mode, reduction of compound of formula (I) and ammonia synthesis occur simultaneously until a steady state is reached. In the steady state, compound of formula (I) is fully or essentially reduced and hydrogen supplied is converted to ammonia.

In **Fig. 1B,** the hydrogen produced by unit 1 and the nitrogen produced by unit 4 are supplied to unit 3 for purification before entering the reactor 2. In this operation mode, separation unit 3 has a dual function, namely purifying starting material and removing reaction product. Otherwise, the system 16 is operated in the 1st mode for ammonia production, as outlined above in the context of fig. 1A.

In **Fig. 2A,** the system is operated in the 1st mode for ammonia production: Units 1, 2 and 4 are operated as above, fig. 1A. The reaction mixture leaves reactor 2 through outlet 2b and enters water separator 12 through inlet 12a. Water leaves the separator through outlet 12c and may be recycled via line 5 or discharged. The rest of the gas mixture, containing or essentially consisting of ammonia, nitrogen and hydrogen, leaves water separator 12 through outlet 12b, and enters ammonia separator through inlet 13a. Ammonia leaves the separator through outlet 13c, while the rest of the gas mixture, containing or essentially consisting of nitrogen and hydrogen, leaves ammonia separator 13 through outlet 13b, and is recycled via line 8.

Again, the ammonia production may be carried out simultaneous to reducing the compound of formula (I) or independently when the compound of formula (I) is fully reduced, as discussed in the context of fig. 1A.

In **Fig. 2B,** the system 16 is operated in the 1st mode for ammonia production. An electrolyzer 1 connected with power supply 15a is fed with water through line 9 into inlet 1a. The thus produced hydrogen is directly fed to reactor inlet 2a. A nitrogen supply unit 4 is used to produce nitrogen. The thus produced nitrogen is directly fed to reactor inlet 2a. Within the reactor, the hydrogen is reacted with nitrogen to produce ammonia, producing a mixture comprising or essentially consisting of ammonia, nitrogen and hydrogen. The gas mixture can additionally contain trace amounts of water. The mixture leaves reactor 2 through outlet 2b and enters ammonia separator 13 through inlet 13a. Ammonia leaves the separator through outlet 13c, while the rest of the gas mixture, containing nitrogen/hydrogen, and potentially trace amounts of water, leaves ammonia separator 13 through outlet 13b, and enters water separator 12 through inlet 12a. Water leaves the separator through outlet 12c. The rest of the gas mixture, containing nitrogen/hydrogen, leaves water separator through outlet 12b and is be recycled via line 8.

In embodiments of the invention, not shown in Fig. 2A and 2B, the hydrogen produced by unit 1 and nitrogen produced by unit 4 may supplied to unit 12 for purification before entering the reactor 2. The remaining steps being the same as discussed in the context of fig 2A or 2B respectively.

In **Fig. 3A,** the system is operated in the 2nd mode for hydrogen and energy production. Water is supplied to the reactor 2 via line 9, where it reacts with a reduced compound of formula (I) to produce a mixture of hydrogen and water and an oxidized compound of formula (I). Th obtained gas mixture is fed to separator 14 to obtain a hydrogen-rich phase and water-rich phase. The hydrogen-rich phase is then supplied to the power generation unit 11 for power production 15b. Optionally, the water from separator 14 and power generation unit 11 is recycled to the reactor via line 5. Optionally, if the hydrogen does not reach full conversion in the power generation unit 11, the non-reacted hydrogen is fed to separator 14 via line 6 for purification and reuse. In fig. 3A hydrogen supply unit 1 and nitrogen supply unit 4 are non-operational and thus not shown.

In **Fig. 3B,** the system with at least two reactor 2 is operated in a combined mode. The reactor 2 is operated in the first mode, similar to the system shown in Fig. 1A. The hydrogen supply unit is replaced by a reactor 2', which is operated in the second mode, similar to the system shown in Fig. 3A.

In a **third aspect,** the invention relates to the use of specific reactors for manufacturing ammonia from $N_2$ and $H_2$ in the gas phase. This aspect of the invention shall be explained in more detail below.

In embodiments, the invention provides for the use of a reactor 2 for manufacturing ammonia from nitrogen and hydrogen in the gas phase, the reactor comprising a reaction vessel (2c) defining an inner volume, at least one inlet and at least one outlet (2a, 2b), a heating element (2e), an insulation (2f), characterized in that said inner volume is filled with a fixed bed; said fixed bed contains or consists of particles of formula (I), $FeO_x$ (I), where 0 --< x --< 1.5, preferably 0 --< x --< 0.1, and said reactor is adapted to reaction pressures of 1 - 10 bar (preferably 1.5 - 9 bar, most preferably 2 - 7.5 bar) and reaction temperatures of 250 - 500 °C (preferably 300 - 475 °C, more preferably 350 - 450 °C). When using a reactor as described in this embodiment exclusively for ammonia synthesis, no oxygen is present in the reactor, thereby avoiding the risk of explosion, given no explosive $H_2/O_2$ mixture being formed. Accordingly, it is not required to implement compensation elements (2d) and it is not required to implement cavity-free filling of the reactor volume. Elements 2a, 2b, 2c, 2e and 2f are as described above, 1st aspect of the invention. Further, the reactor is adapted to continuous operation.

In embodiments, the reactor comprises a compensation element (2d) adapted to adjust said inner volume. Such elements 2d are described above, 1st aspect of the invention.

In embodiments, the reactor is entirely filled with particles of compounds of formula (I). Preferably, the particles of formula (I) do form a fixed bed which is free of cavities as described above.

In embodiments, the reaction vessel has an inner volume is at least 1 m$^3$, preferably at least 10 m$^3$, more preferably at least 50 m$^3$.

In embodiments, the reaction vessel is thin walled an adapted to pressures below 10 bar.

In embodiments, the reactor is free of moving elements and/or free of volume compensation elements.

In embodiments, the reactor is free of cooling elements.

In embodiments, the reactor's fixed bed comprises elements adapted to enhance convective and / or conductive transport of gas and / or heat within the fixed bed (here this is defined as "structured fixed bed"). For example, the fixed bed may contain flow directing elements. Such elements include static mixers and tubes configured to enhance transport of heat and gas. As discussed above, 1st aspect, particles of formula (I) essentially fill the above-described inner volume of reaction vessel 2c. Accordingly, the fixed bed makes up at least 90%, preferably at least 95%, much preferably at least 98% of said inner volume. The remaining volume may be occupied by other elements of the reactor, for example structuring elements, stabilizing elements, heating elements, tubes to supply starting materials and / or remove reaction gasses, one or more in- and outlets.

In a **fourth aspect,** the invention relates to method of operating reactors described in the 3rd aspect. This aspect of the invention shall be explained in more detail below.

In embodiments, invention relates to a method for continuously operating a reactor as defined in the third aspect, comprising the steps of (i) providing a reactor where compound of formula (I) is present, preferably in reduced form (i.e. x < 0.1); (ii) supplying the reactor 2 with a gaseous mixture containing nitrogen and hydrogen during a specified time period $t_1$, and maintaining a specified temperature which is within the range of 250-500°C and maintaining specified pressure which is within the range of 1 -10 bar; and (iii) separating thus obtained ammonia from non-converted nitrogen and hydrogen; and (iv) recycling non-converted nitrogen and hydrogen into the reactor.

The molar ratio of the hydrogen and nitrogen contained in the gas supplied to the reactor may change with time, e.g. to compensate for the fluctuation of hydrogen price. In embodiments, the molar ratio of nitrogen and hydrogen is in the range of 4:1 to 1:10, preferably 1:1 to 1:6, such as 1:3. The inventive operation modes benefit from a tolerance of feed stream; it is not mandatory to adhere to the stochiometric ratio of 1 : 3.

In embodiments, 20 days $--< t_1 --< 200$ days, preferably 40 days $--< t_1 \leqq 120$ days.

In embodiments, concentration of oxygen-containing species in the gas phase during said reaction is <1 vol%, preferably <0.1 vol%, more preferably <0.01 vol%.

In embodiments, said fixed bed contains or consists of: a first group of undoped particles of formula (I), $FeO_x$ (I), where $0 --< x --< 1.5$ and a second group of doped particles of formula (I), $FeO_x$ (I), where $0 \leq x --< 1.5$. Suitable dopants are described above, 1st aspect of the invention, and may be selected from the group consisting of Al (up to 5 wt%, preferably 2-3 wt%, when calculated as $Al_2O_3$), K (upto 2 wt%, preferably 0.5-1 wt%, when calculated as $K_2O$), Ca (up to 3 wt%, preferably 1-2 wt% when calculated as CaO), Co (at least 1 wt%, preferably at least 2 wt%, up to 5 wt% when calculated as $Co_3O_4$).

To further illustrate the invention, the following, nonlimiting **examples** are provided.

### Example 1:

A single-family house having a consumption of 5'200 kWh electric energy per year is equipped with an inventive ammonia production system.

**General Equipment:** For energy production the house is equipped with 108 square meters of photovoltaic panels (18.9 kWp, estimated yearly production 21'350 kWh).

**Ammonia Production System:** The reactor has cylindrical shape, an inner diameter of 1.35 m, and an inner length of 1.35 m. The reactor vessel consists of stainless steel (1.4404/316L) and flat sealing rings made of expanded graphite (Novaphit SSTC, Angst+PfisterAG). The reactor is thermally insulated in all directions using 30 cm of rockwool (Flumroc FMI-500 FPAlum, Indisol AG). The reactor vessel is filled with 2.5 metric tons of compound with formula (I) in the form of magnetite (Bayferrox® 306, Lanxess AG).

**Method of Operation:** Before the start of ammonia production, the compound of formula (I) is reduced (activated) in the reactor. The excess electrical energy is used to produce hydrogen using an electrolyzer (EnapterAEM Electrolyzer EL 4), which is fed to the reactor. The gas leaving the reactor is cooled in a bundle heat exchanger (M&C TechGroup Germany GmbH) by the gas entering the reactor. When the volume fraction of water vapor in the gas leaving the reactor is more than 3%, the gas is further cooled in a condenser maintained at 5 °C by a circulatory cooler (Alphacool Eiszeit 2000). Condensed water leaves the condenser through a condensate drain (M&C TechGroup Germany GmbH). The cold gas passes through a second heat exchanger, which is connected with the cooling system for the household. When the volume fraction of water vapor in the gas is less than 3%, the gas passes through one of two adsorption columns (inner diameter 40 cm, inner height 80 cm, filled with 100 kg of zeolite 4A, Giebel Desiccants) in addition to the condenser. The columns have internal heaters installed for the regeneration of the adsorbent (regeneration temperature: 300 °C). One of the columns could adsorb the water, while the other one is regenerated. When the volume fraction of water vapor in the gas is less than 1%, the circulatory cooler is turned off since water cannot be condensed anymore. The gas leaving the condenser passes a back-pressure regulator (Swagelok), that keeps the pressure at the outlet of the heat exchanger at 1.05 bar abs. The gas passing the pressure is facilitated back to the reactor vessel by means of a pump (N 1400, KNF Neuberger AG). When the volume fraction of water in the gas is less than 0.5%, the system is used for ammonia production. During ammonia production, nitrogen gas stored in a gas cylinder (50 L, 200 bar, net content 11.2 kg, Linde plc) is supplied to the reactor in addition to the hydrogen produced by the electrolyzer. The composition of gas entering the reactor is monitored by gas sensors (thermal conductivity sensor, VQ631, SGX Sensortech) and maintained at around 75 vol% hydrogen and 25 vol% nitrogen. The ammonia is adsorbed with said adsorption column and released with said method for regenerating the column. The ammonia is further absorbed with water to obtain a dilute solution with a concentration of 0.01 mol/kg and used directly as fertilizer in the garden.

For safety reasons, the reactor is equipped with four low pressure regulators: two for prevention of overpressure (1.5 bar abs, ZM-B type, Zimmerli Messtechnik AG) and two for prevention of underpressure (0.8 bar abs, ZM-R type, Zimmerli MesstechnikAG). The underpressure pressure regulators are connected to the nitrogen cylinder and the overpressure regulators are connected to a safe outlet.

The fixed bed is heated internally by multiple internal tubular heating elements (RPT, K. Mösch AG). The temperature within the fixed bed is measured at multiple locations using J-type thermocouples. Additionally, the temperature of the reactor jacket and caps is measured at multiple locations using K-type surface thermocouples. The external temperature of the reactor is controlled at 425 °C during ammonia production.

**Activation of Compound of Formula** (I): During the period from March to October, 7'778 kWh of surplus photovoltaic energy is produced. 4'000 kWh of this energy is converted in electrolyzers ( efficiency of 75% w.r.t. $H_2$-HHV) to 90 kg of hydrogen, 78.4 kg of which is used to reduce the compound of formula (I), the rest is used for ammonia production. The rest of the surplus production is used for heating the reactor, running the cooler, running the pump or sold to the grid.

**Ammonia Production:** During the period from August to October, the reactor is used for ammonia production. A mixture of 75 vol% hydrogen and 25 vol% nitrogen flows through the reactor continuously at a space velocity of 10 h$^{-1}$, generating 0.2 vol% of ammonia at the outlet. The daily ammonia productivity is therefore 731 g/d. Over the course of three months, 11.6 kg of hydrogen is used for producing 65.7 kg of ammonia. Five cylinders of nitrogen is consumed in this process.

**Downtime of the Ammonia Production System:** Optionally, when the system is not used for ammonia production, 78 kg of hydrogen could be obtained by feeding 702 kg of steam to the reactor. The compound of formula (I) is oxidized (deactivated) during this process. The hydrogen is used for producing 1'425 kWh of electricity using a fuel cell (Horizon H-500 PEM Fuel Cell, Fuel Cell Store, efficiency of 55% w.r.t. $H_2$-LHV). The compound of formula (I) must be activated again for the next ammonia production.

## Example 2:

A mid-sized farm having a total area of 500 ha (1 ha = 10'000 m$^2$) is equipped with an inventive ammonia production system.

**General Equipment:** 3% of the farm area is not occupied by crops (e.g. by roads, rivers, trees, buildings) and 20% of this area is covered by solar panels (30'000 m$^2$ of solar panels, yearly production 6'000 MWh, 4'500 MWh of which is produced between March and October). The crop has an annual nitrogen demand of 100 kg N/ha, therefore 60 metric tons of ammonia is needed.

**Ammonia Production System:** The reactor has cuboid shape, an inner width of 10 m, an inner height of 10 m, and an inner length of 10 m. The reactor vessel consists of stainless steel (1.4404/316L) and flat sealing rings made of expanded graphite. The reactor comprises a first array of gas inlet tubes and a second array of gas outlet tubes for the fluids. The tubes of the first and/or second array have a distance of 2 m in between. The tubes are aligned essentially parallel to a longitudinal axis of the reactor. In particular, an array of tubes is therefore aligned horizontally within a reactor or vertically within a reactor. The reactor is thermally insulated in all directions using 1 m of rock wool. The reactor vessel is filled with a mixture of 2'000 metric tons of fine magnetite ($Fe_3O_4$) ore and 500 metric tons of commercial Haber-Bosch catalyst.

**Method of Operation:** Before the start of ammonia production, the compound of formula (I) is reduced (activated) in the reactor. The excess electrical energy is used to produce hydrogen, which is fed to the reactor. The gas leaving the reactor is cooled in a bundle heat exchanger by the gas entering the reactor. When the volume fraction of water vapor in the gas leaving the reactor is more than 3%, the gas is further cooled in a condenser maintained at 5 °C by a circulatory cooler. Condensed water leaves the condenser through a condensate drain. When the volume fraction of water vapor in the gas is less than 3%, the gas passes through one of two adsorption columns (inner diameter 2 m, inner height 3.2 m, filled with 10 metric tons of zeolite 4A) in addition to the condenser. The columns have internal heaters installed for the regeneration of the adsorbent (regeneration temperature: 300 °C). One of the columns could adsorb the water, while the other one is regenerated. When the volume fraction of water vapor in the gas is less than 1%, the circulatory cooler is turned off since water cannot be condensed anymore. The gas leaving the condenser passes a back-pressure regulator, that keeps the pressure at the outlet of the heat exchanger at 1.05 bar abs. The gas passing the pressure is facilitated back to the reactor vessel by means of a blower (National Turbine Corporation). When the volume fraction of water in the gas is less than 0.5%, the system is used for ammonia production. During ammonia production, nitrogen gas produced in the nitrogen supply unit (CanGas CAPN HP PSA nitrogen generator, CanGas Systems Co., Ltd.) is supplied to the reactor in addition to the hydrogen produced by the electrolyzer. The composition of gas entering the reactor is monitored by gas sensors maintained at around 75 vol% hydrogen and 25 vol% nitrogen. The ammonia is absorbed with sulfuric acid and phosphoric acid and used as fertilizer after dilution. After ammonia removal, the gas is further dried by passing through the adsorption column before being sent back to the reactor by the blower.

The fixed bed is heated internally by multiple internal tubular heating elements. The temperature within the fixed bed is measured at multiple locations using J-type thermocouples. The external temperature of the reactor is controlled at 425 °C during charging, ammonia production and discharging.

**Activation of Compound of Formula (I):** During the period from March to October, 4'500 MWh of surplus photovoltaic energy is produced. This energy is converted in electrolyzers (Thyssenkrupp, 80% efficiency w.r.t. $H_2$-HHV) to 91.4 metric tons of hydrogen, 80.6 metric tons of which is used to reduce the compound of formula (I), the rest is used for ammonia production.

**Ammonia Production:** During the period from August to October, the reactor is used for ammonia production. A mixture of 75 vol% hydrogen and 25 vol% nitrogen flows through the reactor continuously at a space velocity of 15 $h^{-1}$, generating 0.25 vol% of ammonia at the outlet. The daily ammonia productivity is therefore 683 kg/d. Over the course of three months, 10.8 metric tons of hydrogen is used for producing 61.5 metric tons of ammonia. This ammonia is absorbed by sulfuric acid and phosphoric acid in a gas scrubber (Büchi AG) to produce 49.9 metric tons of diammonium phosphate (in solution state) and 189.1 metric tons of ammonium sulfate (in solution state).

**Downtime of the Ammonia Production System:** Optionally, when the system is not used for ammonia production, 80 metric tons of hydrogen could be obtained by feeding 720 metric tons of steam to the reactor. The compound of formula (I) is oxidized (deactivated) during this process. The hydrogen is used for producing electricity. The compound of formula (I) must be activated again for the next ammonia production.

**Conclusion:** The system meets the nitrogen demand of the farm using the excess electricity produced in summer.

**Claims**

1. An ammonia production system (16) comprising at least one of:

   • a reactor (2), said reactor converts nitrogen to ammonia and is in fluid communication with
   • a first unit (1), which supplies hydrogen to a reactor inlet, and
   • a second unit (4), which supplies nitrogen to a reactor inlet, and
   • a third unit (3), which continuously separates ammonia received from a reactor outlet; **characterized in that**
   • the reactor (2) comprises a reaction vessel (2c), the reaction vessel

      ∘ is filled with a fixed bed of particles of formula (I)
      $FeO_x$ (I), where $0 -< x -< 1.5$, and
      ∘ has an inner volume of at least 10 $m^3$, and

   • the reactor (2) and unit (3) are adapted to reaction pressures of 1 - 10 bar, and
   • the reactor (2) is adapted to reaction temperatures of 250 - 500°C.

2. The ammonia production system (16) according to claim 1, where

   the reactor (2) complies with one or more of the following:

      • the reactor comprises at least one compensation element (2d), which is adapted to adjust said inner volume;
      • the reactor comprises at least one inlet in fluid communication with unit (1) and with unit (4) and at least one outlet (2a, 2b) in fluid communication with unit (3);
      • the reactor comprises at least one heating element (2e), adapted to heat the reaction vessel to the reaction temperature;
      • the reactor comprises an insulation (2f), adapted to insulate said reaction vessel;
      • the reactor is free of cooling elements; and / or

   the reaction vessel (2c) complies with one or more of the following:

- the reaction vessel (2c) has an inner volume of at least 50m$^3$;
- the reaction vessel (2c) is thin-walled;
- the reaction vessel (2c) is free of means for agitation and/or transportation of particles of formula (I)
- the fixed bed within said reaction vessel (2c) is free of cavities, particularly free of cavities where said cavities being **characterized in that** they have a volume larger than 10'000 mm$^3$ and that all principal radii are at least 3 mm long.

3. The ammonia production system according to claim 1 or 2, where

said third unit (3) comprises:

- a first subunit (12) for separating water, and
- a second subunit (13) for separating ammonia; and / or

said first unit (1) comprises:

- an electrolyzer, converting water to hydrogen by electrochemical reaction; and optionally
- a reactor (2') filled with particles of formula (I) FeO$_x$ (I), where $0 \leqq x \leqq 1$, converting water to hydrogen by oxidizing the particle of formula (I); and / or

said second unit (4) comprises:

- an adsorber adapted to extract nitrogen from air, preferably based on pressure-swing-adsorption; or
- a membrane separation system adapted to extract nitrogen from air.

4. The ammonia production system according to any one of claims 1 to 3, where the system (16) complies with one or more of the following:

- the system (16) does not contain a purge;
- the system (16) contains a recycle line (8), adapted to recycle non-reacted starting materials hydrogen and nitrogen from the third unit (3) into the reactor (2)
- the system (16) is connected to a power plant (15), adapted to supply its units with electricity.

5. The ammonia production system according to any one of claims 1 to 4, where

- the first unit supplies hydrogen obtained from water; and / or
- the second unit supplies nitrogen obtained from air; and / or
- a power plant (15) is present which supplies the ammonia production system (16) with renewable energy.

6. A method of operating an ammonia production system according to any one of claims 1 to 5 in a first operation mode (i), where ammonia is produced for a period $t_1$, the method comprising:

Step (i)(a) supplying the reactor (2) with nitrogen and hydrogen during the specified time period $t_1$, and maintaining a specified temperature which is within the range of 250 - 500°C and maintaining specified pressure which is within the range of 1 - 10 bar; and
Step (i)(b) separating thus obtained ammonia in the third unit and recycling non-converted nitrogen and hydrogen from the third unit into the reactor,
**characterized in that** 20 days --< $t_1$ --< 200 days (preferably 40 days --< $t_1 \leqq$ 120 days).

7. A method for operating an ammonia production system according to any one of claims 1 to 6 in a first operation mode (i) as defined in claim 6, and alternating in a second operation mode (ii), where hydrogen is produced for a period $t_2$, the method additionally comprising:

step (ii) (a) feeding water to the reactor (2) during the specified time period $t_2$, and maintaining a specified temperature which is within the range of 250 - 500°C and maintaining specified pressure which is within the range of 1 - 10 bar; and
step (ii) (b) separating thus obtained hydrogen in the third unit and optionally recycling non-converted water from the third unit into the reactor,

# EP 4 682 105 A1

**characterized in that** 40 days --< $t_2$ --< 200 days (preferably 60 days --< $t_2 \leqq$ 120 days).

8. A method for the continuous production of ammonia, the method comprising:

the step of reacting hydrogen with nitrogen in a reactor (2) as defined in claim 1 to 6,

• at a specified temperature which is within the range of 250 - 500°C and at specified pressure which is within the range of 1 - 10 bar, and
• where said nitrogen and hydrogen are continuously provided to said reactor (2) as a gas phase,
• where the reaction gases, comprising ammonia and non-converted starting materials, are continuously removed from said reactor (2), and
• where the concentration of oxygen-containing species in the gas phase during said reaction is <1 vol%, preferably <0.1 vol%, more preferably <0.01 vol%; and

the step of continuously separating said ammonia from non-reacted starting materials which are recycled to said reactor (2).

9. The method of claim 8, further comprising the step of manufacturing said hydrogen either

• by electrolysis of water, preferably using renewable energy; or
• or by reacting steam with a compound of formula (I) $FeO_x$ (I), where 0 --< x --< 1.

10. The method of claim 8 or 9, further comprising the step of manufacturing said nitrogen by purification of air.

11. A method for the continuous production of ammonia, comprising the step of reacting hydrogen with nitrogen in a reactor containing an iron-containing catalyst, the method comprises:

• continuously supplying starting materials nitrogen and hydrogen to the reactor;
• continuously reacting the starting materials in the reactor, at a specified temperature which is within the range of 250 - 500°C and at specified pressure which is within the range of 1 - 10 bar and in the presence of the iron-containing catalyst, to thereby obtain a product stream containing ammonia,
• continuously separating the thus obtained ammonia from non-reacted starting materials which are recycled to said reactor, **characterized in that** the product stream contains 0.1 - 5 vol% ammonia, preferably 0.2 - 2 vol.% ammonia.

12. Use of a reactor (2) for manufacturing ammonia from nitrogen and hydrogen in the gas phase, the reactor comprising:

• a reaction vessel (2c) defining an inner volume,
• a compensation element (2d),
• at least one inlet and at least one outlet (2a, 2b),
• a heating element (2e),
• an insulation (2f),

**characterized in that**

• said inner volume is filled with a fixed bed; said fixed bed contains or consists of particles of formula (I), $FeO_x$ (I), where 0 --< x --< 1.5; and
• said compensation element (2d) is adapted to adjust said inner volume; and
• said reactor is adapted to reaction pressures of 1 - 10 bar (preferably 1.5 - 7.5 bar) and reaction temperatures of 250 - 500°C (preferably 300-475°C, much preferably 350 - 450°C).

13. The use according to claim 12 where the reactor complies with one or more of the following:

• the inner volume is at least $1m^3$, preferably at least $10m^3$,
• the fixed bed is free of cavities, preferably free of cavities having a volume larger than 10'000 $mm^3$ and where all principal radii are at least 3 mm long,
• the reaction vessel is thin-walled
• the reactor is free of cooling elements.

14. A method for continuously operating a reactor as defined in claim 12 or 13, comprising the steps of

i. providing a reactor (2) comprising a fixed bed, said fixed bed contains or consists of particles of formula (I), $FeO_x$ (I), where $0 \text{ --< } x \text{ --< } 1.5$;

ii. supplying to the reactor (2) a gaseous mixture containing nitrogen and hydrogen during a specified time period $t_1$, and maintaining a specified temperature and pressure; and

iii. separating thus obtained ammonia from non-converted nitrogen and hydrogen; and

iv. recycling non-converted nitrogen and hydrogen into the reactor (2);

**characterized in that**

• 20 days $\text{ --< } t_1 \text{ --< }$ 200 days, and
• the molar ratio nitrogen to hydrogen is between 4:1 to 1:10; and
• temperature is within the range of 250 - 500°C; and
• pressure is within the range of 1 - 10 bar; and
• preferably the concentration of oxygen-containing species in the gas phase during said reaction is <1 vol%, preferably <0.1 vol%, more preferably <0.01 vol%;

preferably said fixed bed contains or consists of: a first group of undoped particles of formula (I), $FeO_x$ (I), where $0 \text{ --< } x \text{ --< } 1.5$ and a second group of doped particles of formula (I), $FeO_x$ (I), where $0 \leq x \text{ --< } 1.5$, the dopants selected from the group consisting of Al, K, Ca and Co.

Fig. 1A

Fig. 1B

Fig. 2A

Fig. 2B

Fig. 3A

Fig. 3B

Europäisches
Patentamt
European
Patent Office
Office européen
des brevets

**EUROPEAN SEARCH REPORT**

Application Number

EP 24 18 9636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/152149 A1 (MALMALI MOHAMMADMAHDI [US] ET AL) 1 June 2017 (2017-06-01) * paragraphs [0042], [0043], [0047], [0048], [0050], [0083], [0084], [0097]; figure 1 * | 1-7 | INV. C01C1/04 B01J8/02 |
| A | US 2010/183497 A1 (CARPENTER R DOUGLAS [US] ET AL) 22 July 2010 (2010-07-22) * paragraph [0018]; example 2 * | 1-7 | |
| A | US 2020/346937 A1 (BEACH JOSEPH D [US] ET AL) 5 November 2020 (2020-11-05) * paragraphs [0008], [0009] * | 1-7 | |
| A | US 2010/260655 A1 (NAKANISHI HARUYUKI [JP] ET AL) 14 October 2010 (2010-10-14) * claims; figures * | 5,7 | |
| | | | TECHNICAL FIELDS SEARCHED (IPC) |
| | | | C01C B01J |

The present search report has been drawn up for all claims

| Place of search | Date of completion of the search | Examiner |
|---|---|---|
| The Hague | 18 December 2024 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 18 9636

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

6, 7(completely); 1-5(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 6, 7(completely); 1-5(partially)

   A method of operating an ammonia production system in a first operation mode (i), where ammonia is produced for a period 20 days <= t1 <= 200 days, the method comprising:
   Step (i)(a) supplying a reactor with nitrogen and hydrogen during the specified time period t1 ,
   and maintaining a specified temperature which is within the range of 250 - 500°C and maintaining specified pressure which is within the range of 1 - 10 bar; and
   Step (i)(b) separating thus obtained ammonia in a third unit and recycling non-converted nitrogen
   and hydrogen from the third unit into the reactor.
   The ammonia production system comprises at least one of:
   - a reactor adapted to reaction pressures of 1 - 10 bar and reaction temperatures of 250 - 500°C and comprising a reaction vessel filled with a fixed bed of particles of formula (I) FeOx (I), where 0 <= x < 1.5, and having an inner volume of at least 10 m3, said reactor being in fluid communication with
   - a first unit (1), which supplies hydrogen to a reactor inlet, and
   - a second unit (4), which supplies nitrogen to a reactor inlet, and
   - a third unit (3), which continuously separates ammonia received from a reactor outlet.
   
   ---

2. claims: 8-10(completely); 1-5(partially)

   A method for the continuous production of ammonia, the method comprising:
   the step of reacting hydrogen with nitrogen in a reactor,
   - at a specified temperature which is within the range of 250 - 500°C and at specified pressure which is within the range of 1 - 10 bar, and
   - where said nitrogen and hydrogen are continuously provided to said reactor as a gas phase,
   - where the reaction gases, comprising ammonia and non-converted starting materials, are continuously removed from said reactor, and
   - where the concentration of oxygen-containing species in the gas phase during said reaction is <1 vol%; and
   the step of continuously separating said ammonia from non-reacted starting materials which are recycled to said reactor.
   The reactor is adapted to reaction pressures of 1 - 10 bar and reaction temperatures of 250 - 500°C and comprises a reaction vessel filled with a fixed bed of particles of formula (I) FeOx (I), where 0 <= x < 1.5, and having an inner volume of at least 10 m3.

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

---

3. claim: 11

A method for the continuous production of ammonia, comprising the step of reacting hydrogen with nitrogen in a reactor containing an iron-containing catalyst, the method comprises:? continuously supplying starting materials nitrogen and hydrogen to the reactor;? continuously reacting the starting materials in the reactor, at a specified temperature which is within the range of 250 - 500°C and at specified pressure which is within the range of 1 - 10 bar and in the presence of the iron-containing catalyst, to thereby obtain a product stream containing ammonia,? continuously separating the thus obtained ammonia from non-reacted starting materials which are recycled to said reactor, the product stream containing 0.1 - 5 vol% ammonia.A method for the continuous production of ammonia, comprising the step of reacting hydrogen with nitrogen in a reactor containing an iron-containing catalyst, the method comprises:
- continuously supplying starting materials nitrogen and hydrogen to the reactor;
- continuously reacting the starting materials in the reactor, at a specified temperature which is within the range of 250 - 500°C and at specified pressure which is within the range of 1 - 10 bar and in the presence of the iron-containing catalyst, to thereby obtain a product stream containing 0.1 - 5 vol% ammonia,
- continuously separating the thus obtained ammonia from non-reacted starting materials which are recycled to said reactor.

---

4. claims: 12-14

A method for continuously operating a reactor, comprising the steps of
i. providing a reactor comprising a fixed bed, said fixed bed contains or consists of particles of formula (I), FeOx (I), where $0 <= x <= 1.5$, compensation element adapted to adjust the inner volume of the reactor, at least one inlet and at least one outlet, a heating element, and an insulation;
ii. supplying to the reactor a gaseous mixture containing nitrogen and hydrogen at a the molar ratio nitrogen to hydrogen is between 4:1 to 1:10 during a specified time period 20 days $<= t1 <=$ 200 days, and maintaining a specified temperature and pressure; and
iii. separating thus obtained ammonia from non-converted nitrogen and hydrogen; and

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

iv. recycling non-converted nitrogen and hydrogen into the reactor;
whereby
- temperature is within the range of 250 - 500°C; and
- pressure is within the range of 1 - 10 bar.
Use of a reactor for manufacturing ammonia from nitrogen and hydrogen in the gas phase, the reactor adapted to reaction pressures of 1 - 10 bar and reaction temperatures of 250 - 500°C comprising:
- a reaction vessel defining an inner volume filled with a fixed bed; said fixed bed contains or consists of particles of formula (I), FeOx (I), where 0 <= x <= 1.5,
- a compensation element adapted to adjust said inner volume,
- at least one inlet and at least one outlet,
- a heating element,
- an insulation.
---

## ANNEX TO THE EUROPEAN SEARCH REPORT
## ON EUROPEAN PATENT APPLICATION NO.

EP 24 18 9636

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2024

| Patent document cited in search report | Publication date | Patent family member(s) | | Publication date |
|---|---|---|---|---|
| US 2017152149 A1 | 01-06-2017 | US | 2015125377 A1 | 07-05-2015 |
| | | US | 2017152149 A1 | 01-06-2017 |
| US 2010183497 A1 | 22-07-2010 | US | 2010183497 A1 | 22-07-2010 |
| | | US | 2011165055 A1 | 07-07-2011 |
| | | US | 2012082612 A1 | 05-04-2012 |
| | | US | 2012308467 A1 | 06-12-2012 |
| | | US | 2014072499 A1 | 13-03-2014 |
| | | US | 2016175816 A1 | 23-06-2016 |
| US 2020346937 A1 | 05-11-2020 | CN | 111372675 A | 03-07-2020 |
| | | CN | 115282881 A | 04-11-2022 |
| | | EP | 3713662 A1 | 30-09-2020 |
| | | US | 2020346937 A1 | 05-11-2020 |
| | | US | 2022289583 A1 | 15-09-2022 |
| | | US | 2025091888 A1 | 20-03-2025 |
| | | WO | 2019104204 A1 | 31-05-2019 |
| US 2010260655 A1 | 14-10-2010 | JP | 5465913 B2 | 09-04-2014 |
| | | JP | 2010241652 A | 28-10-2010 |
| | | US | 2010260655 A1 | 14-10-2010 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023114890 A1
- US 8597583 B2
- US 3305312 A
- US 20040077493 A1
- EP 3395441 A1
- US 6620398 B2

- WO 2022084996 A1
- EP 3699991 B1
- EP 3902040 B1
- US 2582885 A

**Non-patent literature cited in the description**

- *Green Chem.*, 2023, vol. 25, 6603

- *Acta Physicochimica U.R.S.S.*, 1940, vol. 12, 327